# EUROPÄISCHE PATENTANMELDUNG

(11) **EP 3 456 884 A2**
(43) Veröffentlichungstag der Anmeldung: **20.03.2019**
(21) Anmeldenummer: 18170850.4
(22) Anmeldetag: 04.05.2018
(51) Int. Cl.: E02B 8/08

(54) **FISCHAUFSTIEGSANLAGE**

(30) Priorität: 15.09.2017 CH 11442017
(71) Anmelder: WRH Walter Reist Holding AG, 8272 Ermatingen (CH)
(72) Erfinder: MÖCKLI, Heinz, 8624 Grüt (CH)
(74) Vertreter: Frei Patent Attorneys

(57) **Zusammenfassung**

Die Erfindung betrifft Wasserführungseinheit (1.1) für eine Fischaufstiegsanlage (39), umfassend ein Einzelbecken (2.1), welches jeweils einen durch Aussenwände (4.1, 4.2, 3.1, 3.2) und einen Boden (5) begrenzten Wasseraufnahmeraum (8) sowie eine in einer ersten Aussenwand (4.1, 3.1) angeordnete Einlassöffnung (7.1) und eine in einer zweiten Aussenwand (4.2) angeordnete Auslassöffnung (10) für den Durchfluss von Wasser zwischen benachbarten Einzelbecken (2.1) ausbildet. Das Einzelbecken (2.1) enthält eine Innenwandanordnung (6), welche zur Auslassöffnung (10) hin zusammen mit Wandabschnitten von Aussenwänden (3.2, 4.2) eine Durchflusspassage (11) ausbildet, wobei die Innenwandanordnung (6) eine an die zweite Aussenwand (4.2) anschliessende und von der Auslassöffnung (10) in einem Winkel von 30° bis 60° in Richtung Wasseraufnahmeraum (8) wegführende erste Wasserführungswand (13) enthält. Die Innenwandanordnung (6) enthält im Weiteren eine an die erste Wasserführungswand (13) anschliessende und unter Erweiterung der Durchflusspassage (11) entgegen der Durchflussströmungsrichtung (F) relativ zur zweiten Aussenwand (4.2) in einem Winkel von 100° bis 110° angeordnete zweite Wasserführungswand (14); sowie eine an die zweite Wasserführungswand (14) anschliessende und in einem Winkel von 0° bis 15° zur zweiten Aussenwand (4.2) angeordnete und von der Durchflusspassage (11) wegführende Innenquerwand (15).

## Beschreibung

Die Erfindung liegt auf dem Gebiet des Gewässerbaus und betrifft eine Wasserführungseinheit für eine Fischaufstiegsanlage sowie eine Fischaufstiegsanlage für Fische zur Überwindung eines Hindernisses zwischen einem oberseitigen WasserZulauf und einem unterseitigen Wasser-Ablauf gemäss dem Oberbegriff der unabhängigen Ansprüche.

Die Fischaufstiegsanlage enthält hierzu eine Mehrzahl von miteinander verbundenen, eine Durchflussstrecke ausbildenden Wasserführungseinheiten.

Überdies betrifft die Erfindung auch ein Absperrwerk mit einer Fischaufstiegsanlage.

Solche Fischaufstiegsanlagen werden auch Fischpass, Fischweg, Fischwanderhilfe oder umgangssprachlich auch Fischtreppe bezeichnet.

Fische und auch andere Wasserorganismen sind auf die Durchwanderbarkeit der Gewässer angewiesen.

Eine Fischaufstiegsanlage ist eine wasserbauliche Vorrichtung an Fliessgewässern, um Fischen, z. B. im Rahmen der Fischwanderung, und gegebenenfalls auch anderen Wasserorganismen die Möglichkeit zu geben, Hindernisse wie etwa Stauwehre, Kraftwerksstufen, Stufen allgemein, Wasserfälle oder allgemein ein Gefälle zu überwinden. Die Hindernisse können künstlich oder natürlich sein.

Fischaufstiegshilfen zur Sicherstellung der Durchwanderbarkeit sind im Stand der Technik bekannt. In der Regel handelt es sich bei den bekannten Fischaufstiegshilfen um massive Bauwerke aus Beton, welche mit grossem Aufwand und oftmals auch mit erheblichen Geländeeingriffen verbaut werden. Solche Anlagen sind entsprechend teuer und unflexibel und trotz ihres Nutzens für die Umwelt bezüglich Landschaftsschutz problematisch.

Durch gesetzliche Regulierungen werden Gemeinden und Kommunen zunehmend verpflichtet, die Fliessgewässer, und insbesondere auch kleinere Fliessgewässer, für Fische durchgängig passierbar zu machen. Oftmals fehlt den Gemeinden und Kommunen jedoch das Geld, um derart aufwändige Bauwerke zu finanzieren. Ferner sind herkömmliche Konstruktionen oftmals auch nicht flexibel genug, um lokalen Gegebenheiten Rechnung zu tragen. Das heisst, jede Fischaufstiegsanlage muss aufgrund lokaler Gegebenheiten von Grund auf neu konzipiert werden.

Die Publikationsschrift AT 009 955 U1 beschreibt beispielsweise eine aus Betonelementen ausgebildete Fischaufstiegshilfe, welche in einem vorbereiteten Geländeabschnitt eingebettet wird. Die Fischaufstiegsanlage weist den Nachteil auf, dass diese massiv und unflexibel ist und einen Eingriff in das bestehende Gelände erfordert.

Die Publikationsschrift WO 2015/179990 beschreibt eine modular aufgebaute und entsprechend flexible Fischaufstiegsanlage aus Einzelbecken, welche den oben genannten Punkten Rechnung trägt. Allerdings weist die Fischaufstiegsanlage bezüglich der Strömungsführung durch die Einzelbecken sowie der Montage vor Ort Optimierungspotential auf.

Es ist daher eine Aufgabe vorliegender Erfindung, eine optimierte Fischaufstiegsanlage der in der WO 2015/179990 beschriebenen Art vorzuschlagen, welche flexibel in ihrem Aufbau sowie günstig in der Herstellung und Errichtung ist. Die Fischaufstiegsanlage soll schnell und einfach aufbaubar sein. Ferner soll die Fischaufstiegshilfe auch wieder schnell und einfach sowie wiedereinsetzbar abbaubar sowie umbaubar sein.

Die Erstellung der Fischaufstiegsanlage soll insbesondere auch ohne oder mit nur geringen Geländeeingriffen möglich sein.

Eine weitere Aufgabe vorliegender Erfindung besteht darin, die Aufstiegsbedingungen für die Fische in Fischaufstiegsanlage zu optimieren. Dies soll unter anderem durch optimierte Strömungsbedingungen erreicht werden.

Dabei soll die Brauchwassermenge für den Betrieb der Fischaufstiegsanlage so gering wie möglich gehalten werden, da dieses Wasser bei Kraftwerksanlagen zur Erzeugung elektrischer Energie sonst fehlt.

Eine weitere Aufgabe besteht ferner darin, die Fische in der Fischaufstiegsanlage möglichst gut gegen äussere Einflüsse und Fressfeinde zu schützen.

Mindestens eine der Aufgaben wird durch die Merkmale der unabhängigen Ansprüche gelöst. Weitere Ausführungsformen und Weiterbildungen der Erfindung gehen aus den abhängigen Patentansprüchen sowie aus der Beschreibung und den Figuren hervor.

Gemäss einer ersten Lösung enthält die Wasserführungseinheit ein Einzelbecken, welches jeweils einen durch Aussenwände und einen Boden begrenzten Wasseraufnahmeraum sowie eine in einer ersten Aussenwand angeordnete Einlassöffnung und eine in einer zweiten Aussenwand angeordnete Auslassöffnung für den Durchfluss von Wasser zwischen benachbarten Einzelbecken ausbildet.

Das Einzelbecken enthält ferner eine Innenwandanordnung, welche zur Auslassöffnung hin zusammen mit Wandabschnitten von Aussenwänden eine Durchflusspassage ausbildet, wobei die Innenwandanordnung eine an die zweite Aussenwand anschliessende und von der Auslassöffnung in einem Winkel von 30° bis 60° in Richtung Wasseraufnahmeraumwegführende erste Wasserführungswand enthält.

Die Innenwandanordnung der Wasserführungseinheit gemäss dieser ersten und der weiter unten noch beschriebenen zweiten Lösung enthält insbesondere:
- eine an die erste Wasserführungswand anschliessende und unter Erweiterung der Durchflusspassage entgegen der Durchflussströmungsrichtung relativ zur zweiten Aussenwand in einem Winkel von 100° bis 110° angeordnete zweite Wasserführungswand; sowie
- eine an die zweite Wasserführungswand anschliessende und in einem Winkel von 0° bis 15° zur zweiten Aussenwand angeordnete und von der Durchflusspassage wegführende Innenquerwand.

Die Wände der Innenwandanordnung sind entsprechend zusammenhängend ausgebildet.

Gemäss dieser ersten Lösung begrenzen die Aussenwände sowie der Boden den Wasseraufnahmeraum des Einzelbeckens nach aussen.

Die Innenwandanordnung sowohl gemäss der ersten als auch der weiter unten noch beschriebenen zweiten Lösung dient insbesondere der Strömungsführung zur Auslassöffnung bzw. Durchlassöffnung hin. Die Wände der Innenwandanordnung weisen insbesondere die gleiche Höhe auf wie die Aussenwände.

Die erste Wasserführungswand führt gemäss der ersten Lösung insbesondere in einem Winkel von 40° bis 60° und im Speziellen von 45° (spitzer Winkel) in Richtung Wasseraufnahmeraum von der zweiten Wand weg.

Die zweite Wasserführungswand sowohl gemäss der ersten als auch der zweiten Lösung ist zur zweiten Aussenwand insbesondere in einem Winkel von 105° angeordnet. Die erste und zweite Wasserführungswand sind entsprechend in einem stumpfen Winkel zueinander angeordnet.

Die erste und zweite Wasserführungswand können insbesondere gleich lang ausgebildet sein.

Die erste, in einem Winkel von der zweiten Aussenwand wegführende Wasserführungswand verläuft zu einer Aussenwand, d.h. Aussenlängswand, hin, welche die Durchflusspassage mitausbildet.

Entsprechend liegt die Parallelprojektion der ersten Wasserführungswand auf die Ebene, in welcher die zweite Aussenwand verläuft bzw. die Innenquerwandabschnitte verlaufen, mindestens teilweise über der Auslassöffnung.

Die erste Wasserführungswand schliesst gemäss der ersten Lösung insbesondere am seitlichen Rand der Auslassöffnung an die zweite Aussenwand an.

Sowohl gemäss der ersten als auch der weiter unten noch beschriebenen zweiten Lösung sind die Aussenwände wie auch die Wände der Innenwandanordnung insbesondere senkrecht zum Boden des Einzelbeckens bzw. der Wasserführungseinheit ausgerichtet.

Der Boden des Einzelbeckens bzw. der Wasserführungseinheit ist insbesondere eben ausgebildet. Der Boden ist in der Fischaufstiegsanlage, also in Betriebsposition, insbesondere horizontal ausgerichtet.

Die Aussenwände können eine Höhe von 50 cm bis 70 cm, insbesondere von 60 cm aufweisen.

Gemäss einer Weiterbildung der ersten Lösung bilden zwei Aussenwände im Bereich der Durchflusspassage einen rechten Winkel aus, so dass die Durchflusspassage in Durchflussströmungsrichtung eine sprunghafte Verengung ausbildet, welche der Auslassöffnung entspricht.

Die Innenwandanordnung sowohl gemäss der ersten als auch der weiter unten noch beschriebenen zweiten Lösung ist insbesondere derart ausgebildet, dass die Durchflussströmungsrichtung des durch die Auslassöffnung bzw. der Durchflussöffnung aus dem Einzelbecken bzw. der Wasserführungseinheit ausströmenden Wassers gegenüber der zweiten Aussenwand bzw. den Innenquerwandabschnitten einen (spitzen) Winkel von 30° bis 60°, insbesondere von 40° bis 60° und im Speziellen von 45°, einschliesst. Dies wird insbesondere durch die Anordnung der ersten Wasserführungswand erreicht.

Die Innenwandanordnung sowohl gemäss der ersten als auch der weiter unten noch beschriebenen zweiten Lösung bildet ferner im Wasseraufnahmeraum zusammen mit Wandabschnitten von Aussenwänden bzw. mit einem Aussenlängswandabschnitt und einem ersten Innenquerwandabschnitt eine stromabwärts betrachtet neben der Durchflusspassage angeordnete Wasserberuhigungszone aus, welche insbesondere von der Durchflussströmung entkoppelt ist.

Das heisst, die Innenwandanordnung trennt die Durchflusspassage von der Wasserberuhigungszone.

Die Innenwandanordnung bildet zur Wasserberuhigungszone hin insbesondere eine besonders strömungsarme Nische bzw. einen taschenartigen Teilraum aus.

Das Einzelbecken bzw. die Wasserführungseinheit sowohl gemäss der ersten als auch der weiter unten noch beschriebenen zweiten Lösung weist insbesondere eine rechteckige Grundform auf und umfasst eine Aussenwandanordnung mit zwei zueinander parallel verlaufenden Aussenlängswänden.

Gemäss der ersten Lösung weist das Einzelbecken zudem zwei zueinander parallel verlaufende Aussenquerwände auf. Die Aussenquerwände sind gegenüber den Aussenlängswände insbesondere kürzer ausgebildet.

Die Aussenlängswände können eine Länge von 100 cm bis 300 cm, insbesondere von 140 cm bis 160 cm, und im Speziellen von 150 cm aufweisen.

Die Dimensionierung des Einzelbeckens bzw. der Wasserführungseinheit gemäss den beiden Lösungen hängt von der Grösse der Fische ab, welche die Fischaufstiegsanlage passieren sollen. So gilt als Faustregel, dass die Länge der Aussenlängswand mindestens der dreifachen Länge der Fische entsprechen soll, welche die Fischaufstiegsanlage passieren sollen.

Die Länge der Aussenlängswand kann somit als Referenzmass betrachtet werden. Weitere Masse wie die Länge der Aussenquerwand sowie der Innenwandanordnung sind von diesem Referenzmass abhängig und entsprechend mit diesem skalierbar.

So beträgt das Verhältnis der Länge der Aussenquerwand bzw. Breite der Wasserführungseinheit zur Länge der Aussenlängswand bzw. zur Länge der Wasserführungseinheit, insbesondere 1:1.4 bis 1:1.6, und ganz besonders 1:1.45 bis 1:1.55.

Das Verhältnis der Länge der ersten Wasserführungswand zur Länge der Aussenlängswand beträgt insbesondere 1:5 bis 1:7, und ganz besonders 1:5.5 bis 1:6.5.

Das Verhältnis der Länge der zweiten Wasserführungswand zur Länge der Aussenlängswand beträgt ebenfalls insbesondere 1:5 bis 1:7, und ganz besonders 1:5.5 bis 1:6.5.

Das Verhältnis der Länge der Innenquerwand bzw. Abschirmwand zur Länge der Aussenlängswand beträgt insbesondere 1:6 bis 1:9, und ganz besonders 1:7 bis 1:8.

Die Einlassöffnung und die Auslassöffnung sind gemäss der ersten Lösung in voneinander verschiedenen Aussenwänden des Einzelbeckens angeordnet. Die erste Aussenwand mit Einlassöffnung ist selbsterklärend stromaufwärts und die zweite Aussenwand mit Auslassöffnung stromabwärts angeordnet.

Die beiden Aussenwände können einander gegenüberliegend bzw. parallel zueinander angeordnet sein.

Soll die Hauptströmungsrichtung in einer Wasserführungseinheit allerdings um 90° umgelenkt werden, wie dies beispielsweise zu Beginn oder am Ende der Fischaufstiegsanlage gemäss der ersten oder zweiten Lösung der Fall sein kann, so können die erste und zweite Aussenwand, welche die Einlass- bzw. Auslassöffnung aufnehmen auch in einem Winkel, z. B. von 90° zueinander angeordnet sein.

Die Hauptströmungsrichtung entspricht der mittleren Strömungsrichtung des durch die Wasserführungseinheiten einer Fischaufstiegsanlage fliessenden Wassers. Die Hauptströmungsrichtung verläuft insbesondere parallel zu den seitlichen Aussenwänden, d.h. Aussenlängswänden. Die Hauptströmungsrichtung verläuft insbesondere parallel zur Durchflussstrecke.

Das heisst, die Einlassöffnung kann z. B. in einer Aussenlängswand angeordnet sein während die Auslassöffnung in einer Aussenquerwand angeordnet ist oder umgekehrt.

Gemäss einer Ausführungsvariante liegt die Einlassöffnung in einer Aussenquerwand.

Gemäss einer Ausführungsvariante liegt die Auslassöffnung in einer Aussenquerwand.

Gemäss einer besonderen Ausführungsvariante liegt die Einlassöffnung in einer stromaufwärts angeordneten ersten Aussenquerwand und die Auslassöffnung in einer stromabwärts angeordneten zweiten Aussenquerwand.

Gemäss der ersten Lösung ist die Breite der Einlassöffnung gleich gross und insbesondere grösser als die Breite der Auslassöffnung. Die Breite der Einlassöffnung ist insbesondere grösser als die Höhe der Einlassöffnung.

Die Einlassöffnung ist gegen oben insbesondere offen. Die Einlassöffnung wird insbesondere durch eine rechteckförmige Ausnehmung in der ersten Wand ausgebildet. Die Einlassöffnung reicht insbesondere nicht bis zum Boden des Einzelbeckens. Das heisst zwischen Einlassöffnung und Boden wird ein schwellenartiger Wandabschnitt ausgebildet.

Die Auslassöffnung ist insbesondere als Schlitzöffnung ausgebildet. Das heisst insbesondere, die Höhe der Auslassöffnung ist grösser, z.B. mindestens doppelt so gross wie die grösste Breite der Auslassöffnung. Das Verhältnis der Breite der Schlitzöffnung zur Länge der Aussenlängswand beträgt insbesondere 1:6 bis 1:10.

Die Auslassöffnung wird insbesondere durch eine rechteckförmige Ausnehmung in der zweiten Wand ausgebildet.

Die Auslassöffnung teilt die zweite Aussenwand insbesondere in zwei Wandabschnitte auf. Die Auslassöffnung ist insbesondere in einer Hälfte des zweiten Wandabschnittes angeordnet. Das heisst, die Länge des längeren Wandabschnittes beträgt mindestens die Hälfte oder mehr der Gesamtlänge der zweiten Aussenwand.

Gemäss einer besonderen Ausführungsform beträgt die Länge des längeren Wandabschnittes genau die Hälfte der Gesamtlänge der zweiten Aussenwand.

Die Auslassöffnung ist nach oben offen.

Die Auslassöffnung reicht bis zum Boden des Einzelbeckens.

Wie weiter unten noch beschrieben, bilden zwei benachbarte, insbesondere baugleiche, Wasserführungseinheiten einer Fischaufstiegsanlage gemäss der ersten und zweiten Lösung jeweils eine Stufe aus.

Das heisst, die entlang einer Durchflussstrecke hintereinander angeordneten insbesondere baugleichen, Wasserführungseinheiten einer Fischaufstiegsanlage sind jeweils stufen- bzw. treppenartig gegeneinander abgestuft angeordnet. Auf diese Weise entsteht ein Gefälle zwischen jeweils zwei Einzelbecken bzw. zwei Wasserführungseinheiten.

Der oben genannte schwellenartige Wandabschnitt gemäss der ersten Lösung entspricht insbesondere der Höhe der Stufe.

Entsprechend ist der Boden des stromaufwärts benachbarten Einzelbeckens auf Höhe der Oberkante des schwellartigen Wandabschnittes des stromabwärts angeordneten, gleichartigen Einzelbeckens angeordnet.

Im Wasseraufnahmeraum des Einzelbeckens kann an den schwellenartigen Wandabschnitt eine Strömungsrampe angeordnet sein. Die Strömungsrampe überbrückt die genannte Stufe zwischen zwei benachbarten Wasserführungseinheiten und sorgt für ein kontinuierliches Strömungsgefälle zum Boden des Wasseraufnahmeraums hin. Durch diese Massnahme kann ein abrupter Fliesswechsel beim Durchfluss zwischen zwei Wasserführungseinheiten verhindert werden.

Die Strömungsrampe kann konstruktiv oder strömungsdynamisch ausgebildet sein.

Die an die Einlassöffnung anschliessende Strömungsrampe bildet aufgrund des Gefälles eine lokale Zone mit starker Strömung aus. Diese Strömung dient auch als Lockströmung für die Fische zum Passieren des Durchgangs in die stromaufwärts anschliessende Wasserführungseinheit.

Die Rampe endet im Wasseraufnahmeraum. Der Wasseraufnahmeraum bildet einen stromabwärts an die Rampe anschliessenden Boden aus.

Sowohl gemäss der ersten als auch der zweiten Lösung können auf dem Boden Strukturelemente angeordnet sein, welche vom Boden in den Wasseraufnahmeraum abstehen. Die Strukturelemente können Steine, Zapfen, Kegelstümpfe, etc. sein. Die Strukturelemente dienen dazu, die Unebenheiten eines natürlichen Flussbettes nachzubilden.

Die horizontalen Bereiche des Bodens im Wasseraufnahmeraum sorgen wieder für eine Verlangsamung der Strömung, so dass die Fische im Wasseraufnahmeraum nicht einer permanent starken Strömung ausgesetzt sind.

Die insbesondere als Schlitzöffnung ausgebildete Auslassöffnung bzw. Durchlassöffnung stellt eine Verengung des Durchflussquerschnittes dar, was zu einer Beschleunigung der Strömung führt. Die beschleunigte Strömung hat, wie oben erwähnt, unter anderem die Wirkung einer Lockströmung bzw. Leitströmung für die Fische. So sorgt die Schlitzöffnung wiederholt für Lockströmungen entlang der Durchflussstrecke.

Gemäss der ersten Lösung ist das Einzelbecken mit dem Wasseraufnahmeraum so ausgelegt, dass das Wasser stromabwärts durch die Einlassöffnung in den Wasseraufnahmeraum fliesst, diesen durchströmt und durch die Auslassöffnung stromabwärts wieder aus dem Einzelbecken heraus fliesst.

In Ausbildung der Fischaufstiegsanlage gemäss der ersten Lösung sind jeweils mehrere Wasserführungseinheiten unter Ausbildung einer Durchflussstrecke hintereinander angeordnet. Jeweils eine stromaufwärts angeordnete Wasserführungseinheit liegt mit ihrer zweiten Wand, welche die Auslassöffnung ausbildet, der ersten Wand einer stromabwärts anschliessenden Wasserführungseinheit, welche die Einlassöffnung ausbildet, flächig an. Die erste und zweite Wand können über Verbindungsmittel, wie Schraubverbindungen, miteinander verbunden, insbesondere lösbar verbunden sein.

Sowohl gemäss der ersten Lösung als auch der zweiten Lösung deckt sich der Durchflussquerschnitt der Auslassöffnung mit dem Durchflussquerschnitt der Einlassöffnung. Sie bilden zusammen einen Übergang zwischen zwei benachbarten Wasserführungseinheiten aus.

Das durch die Auslassöffnung der stromaufwärts angeordneten Wasserführungseinheit ausströmende Wasser strömt folglich durch die Einlassöffnung der unmittelbar stromabwärts angeordneten Wasserführungseinheit ein.

Gemäss einer bereits erwähnten zweiten Lösung enthält die Wasserführungseinheit für eine Fischaufstiegsanlage eine erste und eine zweite in Hauptströmungsrichtung seitlich angeordnete Aussenlängswand und einen zwischen den Aussenlängswänden angeordneten Boden, welche einen Grundkörper ausbilden. Ferner enthält die Wasserführungseinheit eine Einlassöffnung und eine der Einlassöffnung gegenüber liegende Auslassöffnung für den Durchfluss von Wasser zwischen benachbarten Wasserführungseinheiten.

Das heisst, das Wasser fliesst durch die Einlassöffnung in die Wasserführungseinheit hinein und verlässt diese wieder durch die Auslassöffnung.

Die Wasserführungseinheit enthält eine entlang der Hauptströmungsrichtung betrachtet zwischen der Einlassöffnung und der Auslassöffnung erstreckende Innenwandanordnung, welche, insbesondere zusammen mit einer Aussenlängswand, eine Durchflusspassage, d.h. einen Durchflusskanal, ausbildet.

Die Innenwandanordnung enthält quer zu den Aussenlängswänden verlaufende Innenquerwandabschnitte, insbesondere einen ersten und zweiten Innenquerwandabschnitt.

Zwischen zwei bzw. dem ersten und zweiten Innenquerwandabschnitt wird die Durchlassöffnung der Durchflusspassage ausgebildet.

Die Durchlassöffnung ist insbesondere als Schlitzöffnung ausgebildet. Das heisst insbesondere, die Höhe der Auslassöffnung ist grösser, z.B. mindestens doppelt so gross wie die grösste Breite der Durchlassöffnung. Das Verhältnis der Breite der Schlitzöffnung zur Distanz zwischen den beiden Aussenlängswänden beträgt insbesondere 1:6 bis 1:10.

Die Durchlassöffnung wird insbesondere durch eine rechteckförmige Ausnehmung zwischen zwei Innenquerwandabschnitten ausgebildet.

Die Durchlassöffnung ist insbesondere so angeordnet, dass die Länge des längeren, ersten Innenquerwandabschnittes mindestens die Hälfte oder mehr als die Hälfte der Distanz zwischen den Aussenlängswänden beträgt.

Gemäss einer besonderen Ausführungsform beträgt die Länge des längeren, ersten Wandabschnittes genau die Hälfte der Gesamtlänge der Distanz zwischen den Aussenlängswänden.

Die Durchlassöffnung ist im Grundkörper in der Wasserführungseinheit insbesondere nach oben offen. Die Durchlassöffnung reicht insbesondere bis zum Boden des Einzelbeckens.

Ferner enthält die Innenwandanordnung eine an den ersten Innenquerwandabschnitt anschliessende und von der Durchlassöffnung in Richtung Einlassöffnung in einem Winkel von 30° bis 60°, insbesondere von 45°, bezogen auf den Durchlassquerschnitt der Durchlassöffnung wegführende Wasserführungswand.

Die erste Wasserführungswand schliesst insbesondere am seitlichen Rand der Durchlassöffnung am ersten Innenquerwandabschnitt an.

Die Innenwandanordnung bzw. deren Innenquerwandabschnitte sind also bezogen auf die Auslassöffnung in Richtung Einlassöffnung gegenüber der Auslassöffnung bzw. dem stromabwärts zugewandten Ende der Wasserführungseinheit zurückversetzt angeordnet.

Dies im Gegensatz zur weiter oben beschriebenen ersten Lösung, gemäss welcher die Innenwandanordnung auch die auslassseitige Aussenwand mit Auslassöffnung ausbildet.

Die Innenwandanordnung bzw. deren Innenquerwandabschnitte sind beispielsweise um ein Fünftel bis zur Hälfte der Gesamtlänge der Wasserführungseinheit in Richtung Einlassöffnung zurückversetzt in der Wasserführungseinheit bzw. in deren Inneren angeordnet.

Die Innenwandanordnung bzw. deren Innenquerwandabschnitte sind insbesondere um ein Viertel bis zur Hälfte der Gesamtlänge der Wasserführungseinheit in Richtung Einlassöffnung zurückversetzt in der Wasserführungseinheit bzw. in deren Inneren angeordnet.

Die Innenwandanordnung bzw. deren Innenquerwandabschnitte sind ganz besonders um ein Drittel bis zur Hälfte der Gesamtlänge der Wasserführungseinheit in Richtung Einlassöffnung zurückversetzt in der Wasserführungseinheit bzw. in deren Inneren angeordnet.

Gemäss einer Weiterbildung der Erfindung bilden eine (zweite) Aussenlängswand bzw. ein Aussenlängswandabschnitt und der zweite Innenquerwandabschnitt im Bereich der Durchflusspassage einen rechten Winkel aus, so dass die Durchflusspassage in Strömungsrichtung eine sprunghafte Verengung ausbildet, welche der Durchlassöffnung entspricht.

Bezüglich der Geometrie und Ausbildung der Innenwandanordnung bzw. deren Wandabschnitte und deren Wirkungen, gelten dieselben Aussagen wie sie weiter oben bereits im Zusammenhang mit der ersten Lösung gemacht wurden. Daher wird an dieser Stelle darauf verzichtet, sämtliche Merkmale zu wiederholen.

Unterschiede gibt es allerdings in der Terminologie. So entsprechen die Innenquerwandabschnitte der zweiten Lösung den Aussenquerwänden bzw. der zweiten Wand gemäss der ersten Lösung und die Abschirmwand entspricht der Innenquerwand gemäss der ersten Lösung. Ferner ist gemäss der zweiten Lösung nicht die Auslassöffnung sondern eine von der Auslassöffnung unabhängige Durchlassöffnung Teil der Durchflusspassage.

Gemäss einer Weiterbildung der Erfindung weisen die Einlassöffnung und die Auslassöffnung jeweils eine quer zu den Aussenlängswänden verlaufende Breite auf, welche der Distanz zwischen den Aussenlängswänden entspricht.

Gemäss einer Weiterbildung der Erfindung weisen die Einlassöffnung und die Auslassöffnung jeweils eine Höhe auf, welche der Höhe der Aussenlängswänden entspricht.

Die erste Einlassöffnung ist stromaufwärts und die zweite Auslassöffnung stromabwärts angeordnet.

Die Durchflussquerschnitte der Ein- und Auslassöffnung sind insbesondere parallel zueinander angeordnet.

Die Breite der Ein- bzw. Auslassöffnung ist insbesondere grösser als die Höhe der Ein- bzw. Auslassöffnung. Der Durchlassquerschnitt der Ein- bzw. Auslassöffnung ist insbesondere rechteckförmig.

Die Durchflussquerschnitte der Einlass- und der der Auslassöffnung sind insbesondere identisch.

Die Einlass- und Auslassöffnung ist im Grundkörper gegen oben insbesondere offen.

Die Einlassöffnung der Wasserführungseinheit ist gegenüber der Auslassöffnung der stromaufwärts angeordneten, benachbarten Wasserführungseinheit insbesondere höhenversetzt angeordnet.

Die zweite Lösung betrifft auch eine Fischaufstiegsanlage mit einer Mehrzahl von miteinander verbundenen, eine Durchflussstrecke ausbildenden Wasserführungseinheiten, insbesondere gemäss der zweiten Lösung.

Die Auslassöffnung einer stromaufwärts angeordneten Wasserführungseinheit trifft jeweils mit der Einlassöffnung einer stromabwärts benachbart angeordneten Wasserführungseinheit zusammen.

Im Übergang zwischen zwei Wasserführungseinheiten wird jeweils eine Stufe oder Rampe ausgebildet. Die Stufe bzw. Rampe bildet in Strömungsrichtung ein Gefälle aus.

Zur Ausbildung der Stufe oder Rampe sind jeweils zwei benachbarte Wasserführungseinheiten zueinander höhenversetzt bzw. abgestuft angeordnet.

Entsprechend liegen die Böden benachbarter Wasserführungseinheiten jeweils auf unterschiedlichen Ebenen. Die stromabwärts angeordnete Wasserführungseinheit ist hierbei in Schwerkraftrichtung nach unten versetzt angeordnet.

Im Bereich der Einlassöffnung der Wasserführungseinheit, wo die Stufe benachbarter Wasserführungseinheiten ausgebildet wird, kann eine Strömungsrampe angeordnet sein. Diese dient demselben Zweck wie die im Zusammenhang mit der ersten Lösung weiter oben beschriebene Strömungsrampe.

Zwischen der Innenwandanordnung einer stromaufwärts angeordneten Wasserführungseinheit und der Innenwandanordnung einer stromabwärts angeordneten Wasserführungseinheit wird jeweils ein Wasseraufnahmeraum ausgebildet.

Im Gegensatz zur weiter oben beschriebenen ersten Lösung wird der Wasseraufnahmeraum gemäss der zweiten Lösung nicht durch die Wasserführungseinheit bzw. ein Einzelbecken selbst sondern durch zwei benachbarte Wasserführungseinheiten ausgebildet.

Der Wasseraufnahmeraum kann als Kanalabschnitt ausgebildet sein. Der Kanalabschnitt ist insbesondere von konstanter Breite.

Die Wasserführungseinheiten sind insbesondere über Verbindungselemente miteinander verbunden. Die Verbindungselemente können Teil der Tragstruktur sein.

Wie oben bereits erwähnt, strömt das Wasser gemäss den beiden beschriebenen Lösungen bedingt durch die Innenwandanordnung der stromaufwärts angeordneten Wasserführungseinheit schräg zu einer Hauptströmungsrichtung, das heisst in einem spitzen Winkel von weniger als 90°, insbesondere von 30° bis 60°, ganz besonders von 40° bis 60° und im Speziellen von 45° zur ersten Aussenwand in den gemeinsam von zwei, insbesondere baugleichen Wasserführungseinheiten ausgebildeten Wasseraufnahmeraum bzw. den Wasseraufnahmeraum der stromabwärts benachbarten, insbesondere baugleichen Wasserführungseinheit bzw. Einzelbeckens ein.

Die Ein- und Auslassöffnungen der Wasserführungseinheiten sind gemäss der zweiten Lösung insbesondere innerhalb des Wasseraufnahmeraums angeordnet.

Gemäss der ersten Lösung strömt das Wasser dadurch im selben Winkel relativ zur ersten Aussenwand durch die Einlassöffnung ein, wie dieses relativ zur zweiten Aussenwand durch die Auslassöffnung ausströmt.

Dies hat unter anderem zur Folge, dass die Einströmrichtung in das Einzelbecken bzw. die Wasserführungseinheit bzw. in den Wasseraufnahmeraum nicht direkt zur Auslassöffnung bzw. Durchflusspassage im Einzelbecken bzw. in der Wasserführungseinheit gerichtet ist. Das einfliessende Wasser wird vielmehr zur nachfolgend noch beschriebenen Beruhigungszone hin abgelenkt.

Die oben beschriebene Einströmrichtung bewirkt zusammen mit der Innenwandanordnung, dass das Wasser im Einzelbecken bzw. in der Wasserführungseinheit einen schlaufenförmigen bzw. mäandrierenden Strömungsverlauf aufweist. Dieser kann insbesondere Omega-(Ω)-förmig sein.

Das durch die Einlassöffnung bzw. durch die Durchlassöffnung in den Wasseraufnahmeraum einfliessende Wasser strömt dabei zuerst schräg in Richtung Beruhigungszone und anschliessend in einer Querströmung zur Durchflusspassage hin, um anschliessend durch die Durchflusspassage und die Auslassöffnung bzw. Durchlassöffnung wieder aus dem Wasseraufnahmeraum abzufliessen.

In der Beruhigungszone wird dank der besonderen Innenwandanordnung eine von der Durchflussströmung abgekoppelte, strömungsarme Umgebung ausgebildet. Die in der Beruhigungszone auftretende schwache Strömung weist eine Tendenz zur Wirbelbildung auf. Das heisst, in der Beruhigungszone findet insbesondere keine Durchströmung statt.

Die Beruhigungszone bildet eine Ruhewasserzone aus, in welcher sich die Fische und andere Organismen abseits der Durchflussströmung erholen können. Mit einer solchen Beruhigungszone wird dem unterschiedlichen Leistungsvermögen der Fische Rechnung getragen. Die Fischaufstiegsanlage ermöglicht so für die meisten Fischarten einen stress- und verletzungsfreien Aufstieg.

Die weiter oben bereits erwähnte Nische bzw. der taschenartige Teilraum schafft innerhalb der Beruhigungszone eine besonders ausgeprägte strömungsarme Zone. Der Teilraum schliesst die Beruhigungszone zur Durchflusspassage hin ab, so das dass Wasser nur von einer, der Innenwandanordnung gegenüber liegenden Seite in den Teilraum ein- und ausfliessen kann.

Strömungsarme Verhältnisse, wenn auch im geringeren Ausmass, treten auch im Inneren des schlaufenartigen Strömungsmusters zwischen Einlassöffnung und Durchflusspassage gemäss der ersten Lösung auf, wobei hier allerdings die Tendenz zur Wirbelbildung ausgeprägter ist.

Das Einzelbecken bzw. die Wasserführungseinheit gemäss der ersten und zweiten Lösung besteht insbesondere aus einem faserverstärktem Kunststoff. Verstärkungsfasern können Glasfasern sein. Der Kunststoff ist insbesondere ein Duroplast. So kann der Kunststoff ein Epoxidharz sein.

Das Einzelbecken bzw. die Wasserführungseinheit kann jedoch auch aus Metall, wie Stahl, aus Holz, aus Beton oder aus Faserzement sein.

Das Einzelbecken bzw. die Wasserführungseinheit mit Aussenwänden, Boden und Innenwandanordnung ist insbesondere einteilig ausgebildet.

Das Einzelbecken bzw. die Wasserführungseinheit ist gegen oben insbesondere offen ausgebildet. Damit die Fische in der Fischaufstiegshilfe vor Fressfeinden, wie z.B. Reiher, geschützt sind, kann die Wasserführungseinheit eine über dem Einzelbecken bzw. Grundkörper angeordnete Abdeckung aufweisen. Die Abdeckung kann das Einzelbecken bzw. den Grundkörper vollständig oder teilweise abdecken. Die Abdeckung kann lösbar bzw. abnehmbar am Einzelbecken bzw. Grundkörper montiert sein.

Die Abdeckung kann relativ zum Einzelbecken bzw. Grundkörper schwenkbar ausgebildet sein. Die Abdeckung kann insbesondere über eine Scharnierverbindung schwenkbar am Einzelbecken bzw. Grundkörper befestigt sein. Dadurch lässt sich die Abdeckung unter Freigabe eines Zugangs von oben in den Wasseraufnahmeraum vom Einzelbecken bzw. Grundkörper wegschwenken.

Gemäss einer Weiterbildung der Abdeckung bildet diese ein Pultdach aus. Dieses zeichnet sich durch eine Neigung zu einer Seite hin aus.

Die Abdeckung kann über entsprechende Arretierorgane, welche ein Schwenken der Abdeckung um die Scharnierverbindung verhindern, am Einzelbecken bzw. Grundkörper arretiert sein. Zum Wegschwenken der Abdeckung muss die Arretierung entsprechend zuerst gelöst werden.

Gemäss einer Weiterbildung der Erfindung ist im Boden des Einzelbeckens bzw. Grundkörpers mindestens eine Befestigungsöffnung angeordnet. Bevorzugt sind im Boden mehrere Befestigungsöffnungen vorgesehen. Die Wasserführungseinheit wird über die mindestens eine Befestigungsöffnung mit einer darunter liegenden Tragstruktur verbunden.

Gemäss einer besonderen Variante dieser Weiterbildung ist um die mindestens eine Befestigungsöffnung eine in den Wasseraufnahmeraum hinein ragende Positionierhülse angeordnet.

Die Befestigung der Wasserführungseinheiten über die mindestens eine Befestigungsöffnung wird weiter unten im Zusammenhang mit der Tragstruktur näher beschrieben.

Wie bereits weiter oben erwähnt, betrifft die Erfindung auch eine Fischaufstiegsanlage mit einer Mehrzahl von aneinander befestigten, eine Durchflussstrecke ausbildenden Wasserführungseinheiten, welche jeweils eine Einlassöffnung und eine Auslassöffnung für den Durchfluss von Wasser zwischen benachbarten Einzelbecken bzw. Wasserführungseinheiten sowie enthaltend eine Tragstruktur zur Befestigung von Wasserführungseinheiten an einer ortsfesten Installation, insbesondere an einem Absperrbauwerk. Gemäss der ersten Lösung bilden die Einzelbecken wie bereits erwähnt jeweils einen Wasseraufnahmeraum aus.

Die Wasserführungseinheiten sind insbesondere gemäss der bereits weiter oben beschriebenen Art und Weise nach der ersten oder zweiten Lösung ausgebildet.

Die Tragstruktur umfasst nun erfindungsgemäss mindestens eine winkelverstellbare Konsole mit einem Auflagearm und mit mindestens einem Wandbefestigungselement zur Befestigung an der Aussenwand der Installation. Die Konsole ist insbesondere eine Winkel-Konsole.

Der Auflagearm bildet insbesondere eine Auflagefläche aus. Die mindestens eine Winkel-Konsole umfasst im Weiteren insbesondere eine Einrichtung zum Verstellen der Lage des Auflagearms und somit der Auflagefläche relativ zum mindestens einen Wandbefestigungselement.

Die Verstelleinrichtung kann eine an der Installation befestigte Spindelschraube mit Verstellmutter umfassen.

Das Wandbefestigungselement dient der Befestigung der Winkel-Konsole an einer Wand der Installation.

Die Verstellbarkeit dient insbesondere einer horizontalen Ausrichtung der Auflagefläche des Auflagearms. Dies unabhängig von der Ausrichtung und Form der Wand, an welcher die Winkel-Konsole befestigt wird.

Gemäss einer Weiterbildung umfasst die Winkel-Konsole im Weiteren eine, insbesondere wandseitige Vertikalstrebe, welche mit einem ersten Ende gelenkig mit dem Auflagearm und mit dem zweiten Ende insbesondere gelenkig mit dem Wandbefestigungselement verbunden ist.

Die Winkel-Konsole kann im Weiteren eine längenverstellbare Diagonalstrebe umfassen. Die Diagonalstrebe kann z. B. zwei teleskopartig ineinander schiebbare Strebenelemente umfassen.

Die Diagonalstrebe ist mit einem ersten Ende mit dem Auflagearm verbunden. Die Diagonalstrebe ist mit einem zweiten Ende mit dem bzw. mit einem Wandbefestigungselement verbunden. Die Diagonalstrebe ist mit dem Auflagearm und dem Wandbefestigungselement jeweils insbesondere über eine Gelenkverbindung verbunden.

Die Tragstruktur umfasst gemäss einer Weiterbildung der Erfindung Auflageelemente, welche den Auflageflächen der Auflagearme aufliegen. Die Auflageelemente bilden Auflageflächen für die Wasserführungseinheiten aus. Auf einem Auflageelement ist jeweils insbesondere eine Wasserführungseinheit angeordnet.

Die Auflageelemente sind jeweils in der Höhe zueinander versetzt, und insbesondere einander überlappend auf den Winkel-Konsolen angeordnet. Die Höhe der Auflageelemente bildet insbesondere zugleich die Höhe der Stufe aus.

An den Auflageelementen sind Befestigungsnocken angeordnet. Diese greifen beim Aufsetzen der Wasserführungseinheiten auf die Auflageelemente zwecks Montage der Wasserführungseinheiten an der Tragstruktur in die Befestigungsöffnungen und die Positionierhülsen im Boden der Einzelbecken bzw. Grundkörper ein. Die Wasserführungseinheiten werden bei der Montage in Anschlag mit der Stirnseite des stromaufwärts überlappenden Auflageelements gebracht.

Die Wasserführungseinheiten können über entsprechende Sicherungselemente, z. B. über Schraubverbindungen, gegen eine axiale Verschiebung der Befestigungsnocken entlang der Positionierhülsen gesichert sein.

Die erfindungsgemässe Fischaufstiegsanlage zeichnet sich durch eine einfache und schnelle Montage und Demontage der Wasserführungseinheiten aus. Die Anlage lässt sich insbesondere auch problemlos umbauen oder geänderten Umgebungsbedingungen anpassen. Da die Wasserführungseinheiten wie auch die Tragstruktur in Leichtbauweise erstellt werden können, lässt sich die erfindungsgemässe Fischaufstiegsanlage, obwohl modulartig ausgeführt, ohne schweres Gerät auf- und abbauen.

Mit der erfindungsgemässen Fischaufstiegsanlage können grosse Höhenunterschiede über kurze Strecken und mit sehr geringem Flächenbedarf überwunden werden. Dies insbesondere ohne oder mit nur geringen Geländeeingriffen.

Die Wasserführungseinheiten können für unterschiedliche Streckenführungen, wie lineare Strecken, wendelförmige Strecken, verwinkelte Strecken, etc., konzipiert sein. Es kann vorgesehen sein, dass wie oben bereits angesprochen mehrere Typen von Wasserführungseinheiten hergestellt werden, mit welchen sich unterschiedliche Streckenführungen konzipieren lassen.

Das heisst, eine Fischaufstiegsanlage kann mittels einem oder mehreren Typen von erfindungsgemässen Einzelbecken bzw. Wasserführungseinheiten gemäss dem Baukastenprinzip frei konzipiert werden.

Die Anordnung der Einzelbecken bzw. Wasserführungseinheiten ist dabei jeweils insbesondere treppenförmig.

Die Wasserführungseinheiten bzw. Einzelbecken eines baugleichen Typs können in Serienfertigung hergestellt werden. Die Fischaufstiegsanlage kann entsprechend aus einer Vielzahl von baugleichen Wasserführungseinheiten bzw. Einzelbecken modular aufgebaut werden.

Die Horizontallage der Einzelbecken bzw. Wasserführungseinheiten sichert einen ruhigen und turbulenzarmen Wasserdurchfluss. Die schlitzförmigen Auslassöffnungen in den Einzelbecken gemäss der ersten Lösung bzw. die schlitzartigen Durchlassöffnungen in den Grundkörpern gemäss der zweiten Lösung erzeugen zudem im Übergang zwischen zwei Einzelbecken sowie innerhalb der Einzelbecken bzw. innerhalb eines Grundkörpers jeweils eine interne Lockströmung für die Fische entlang der Durchflussstrecke.

Insbesondere die schräg zur Beruhigungszone hin gerichtete Strömung im Wasseraufnahmeraum dient als Lockströmung, um die Fische aus der strömungsarmen Beruhigungszone wieder herauszulocken.

Im Weiteren ist der Wasserbedarf für den Betrieb der erfindungsgemässen Fischaufstiegsanlage vergleichsweise gering. Dies, weil das Wasser die Wasserführungseinheiten nicht direkt durchfliesst, sondern durch das mäandrierende Strömungsmuster aufgehalten wird. Deshalb ist die erfindungsgemässe Fischaufstiegsanlage auch unempfindlich gegenüber schwankenden Wasserständen im Oberwasser.

Aus den oben genannten Gründen werden in den Einzelbecken auch relativ grosse Wassertiefen erreicht. Aufgrund der Beschleunigung des Wassers durch die schlitzförmige Auslassöffnung bzw. Durchlassöffnung entwickelt sich beim Einströmen in den Wasseraufnahmeraum, z. B. im angrenzenden Einzelbecken gemäss der ersten Lösung, zudem eine turbulente Strömung, welche für eine Sauerstoffanreicherung sorgt.

Die Erfindung betrifft im Weiteren auch ein Absperrbauwerk mit einer Fischaufstiegsanlage, insbesondere mit einer Fischaufstiegsanlage gemäss der ersten oder zweiten Lösung wie weiter oben bereits beschrieben, sowie mit einer Mehrzahl von miteinander verbundenen, eine Durchflussstrecke ausbildenden Wasserführungseinheiten gemäss der ersten oder zweiten Lösung, welche jeweils eine Einlassöffnung und eine Auslassöffnung für den Durchfluss von Wasser zwischen benachbarten Wasserführungseinheiten ausbilden. Die Wasserführungseinheiten sind insbesondere gemäss der weiter oben bereits beschriebenen Art und Weise ausgebildet. Die Wasserführungseinheiten gemäss der ersten Lösung bilden wie oben bereits erwähnt einen Wasseraufnahmeraum aus.

Erfindungsgemäss sind Wasserführungseinheiten über eine Tragstruktur, wie sie z. B. weiter oben bereits beschrieben wurde, entlang einer stromabwärts weisenden Aussenwand des Absperrbauwerks befestigt. Entsprechend verläuft die Durchflussstrecke wenigstens abschnittsweise und insbesondere vollständig parallel zur Aussenwand des Absperrbauwerks. Dies heisst in der Regel auch, dass die Durchflussstrecke entlang des Absperrbauwerks quer zur Hauptströmungsrichtung des Gewässers verläuft.

Die Wasserführungseinheiten sind hierzu unter Ausbildung einer parallel zur Aussenwand des Absperrbauwerks verlaufenden Reihe von Wasserführungseinheiten entlang der Durchflussstrecke hintereinander angeordnet sind.

Diese Anordnung der Fischaufstiegsanlage ist gegenüber konventionellen Fischaufstiegsanlagen, welche in der Regel über wesentliche Streckenabschnitte parallel zur Hauptströmungsrichtung des Gewässers verlaufen, einzigartig.

Das Absperrbauwerk ist insbesondere eine Staumauer bzw. eine Stufe.

Die erfindungsgemässe Anordnung ist äusserst platzsparend und nutzt den freien Raum stromabwärts unterhalb des Absperrwerkes optimal aus.

Folglich entfallen im Wesentlichen auch Geländeeingriffe zu beiden Seiten des Gewässers bzw. des Absperrbauwerks, wie dies bei herkömmlichen Fischaufstiegsanlagen üblicherweise der Fall ist.

Der nicht durch die Fischaufstiegsanlage beanspruchte Raum beidseits vom Gewässer bzw. vom Absperrwerk kann somit anderweitig genutzt werden.

Die Erfindung wird nachfolgend anhand von Figuren näher erläutert. Es zeigen:
- Figur 1:: eine perspektivische Ansicht des Einzelbeckens einer erfindungsgemässen Wasserführungseinheit gemäss einer ersten Lösung;
- Figur 2:: eine weitere perspektivische Ansicht des Einzelbeckens nach Figur 1;
- Figur 3:: eine Draufsicht des Einzelbeckens nach Figur 1;
- Figur 4:: eine perspektivische Ansicht des Einzelbeckens einer weiteren Ausführungsform einer erfindungsgemässen Wasserführungseinheit gemäss der ersten Lösung;
- Figur 5:: eine Draufsicht des Einzelbeckens nach Figur 4;
- Figur 6:: eine perspektivische Ansicht von aneinandergereihten Einzelbecken gemäss den Figuren 1 bis 5 zur Ausbildung einer Fischaufstiegsanlage;
- Figur 7:: eine perspektivische Ansicht einer erfindungsgemässen Fischaufstiegsanlage mit aneinandergereihten Einzelbecken nach Figur 6;
- Figur 8:: eine Draufsicht zweier benachbarter Grundkörper von zwei erfindungsgemässen Wasserführungseinheiten gemäss einer zweiten Lösung;
- Figur 9:: eine perspektivische Ansicht von aneinandergereihten Grundkörpern gemäss der Figur 8 zur Ausbildung einer Fischaufstiegsanlage.

Grundsätzlich sind in den Figuren gleiche Teile mit gleichen Bezugszeichen versehen. Für das Verständnis der Erfindung sind gewisse Merkmale in den Figuren nicht dargestellt.

Die beschriebenen Ausführungsbeispiele stehen lediglich beispielhaft für den Erfindungsgegenstand und haben keine beschränkende Wirkung.

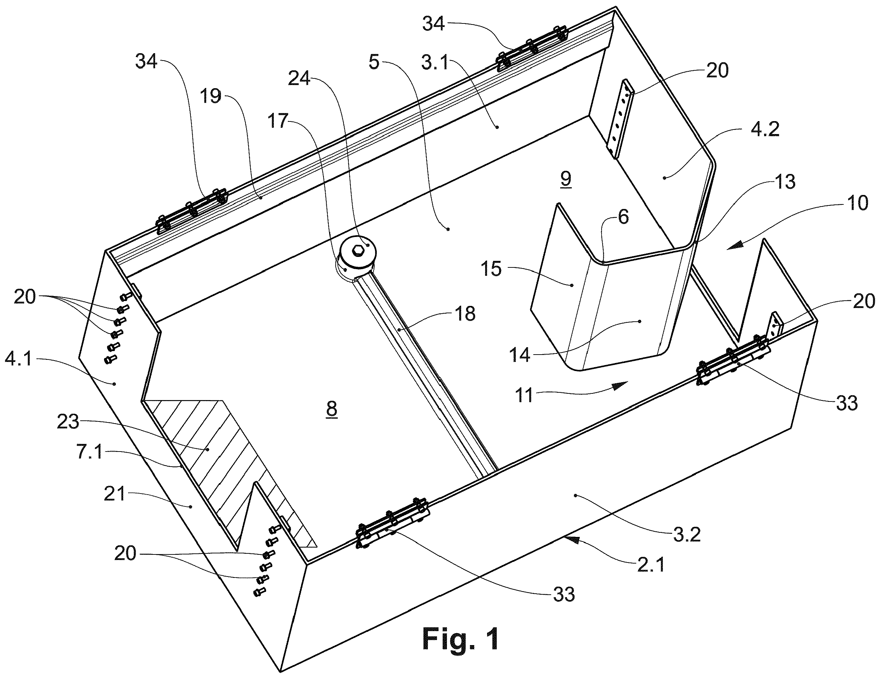

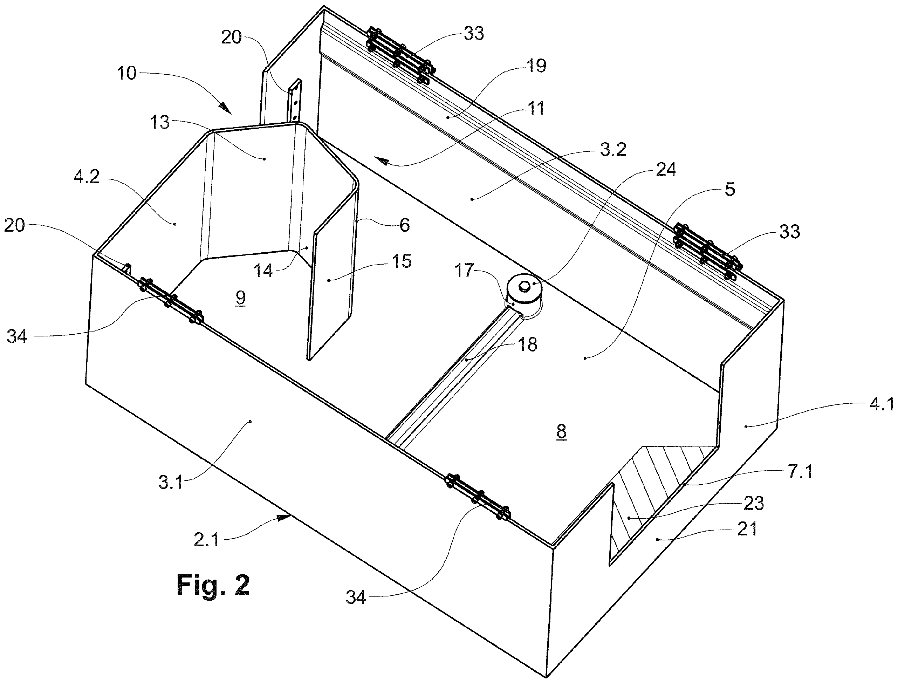

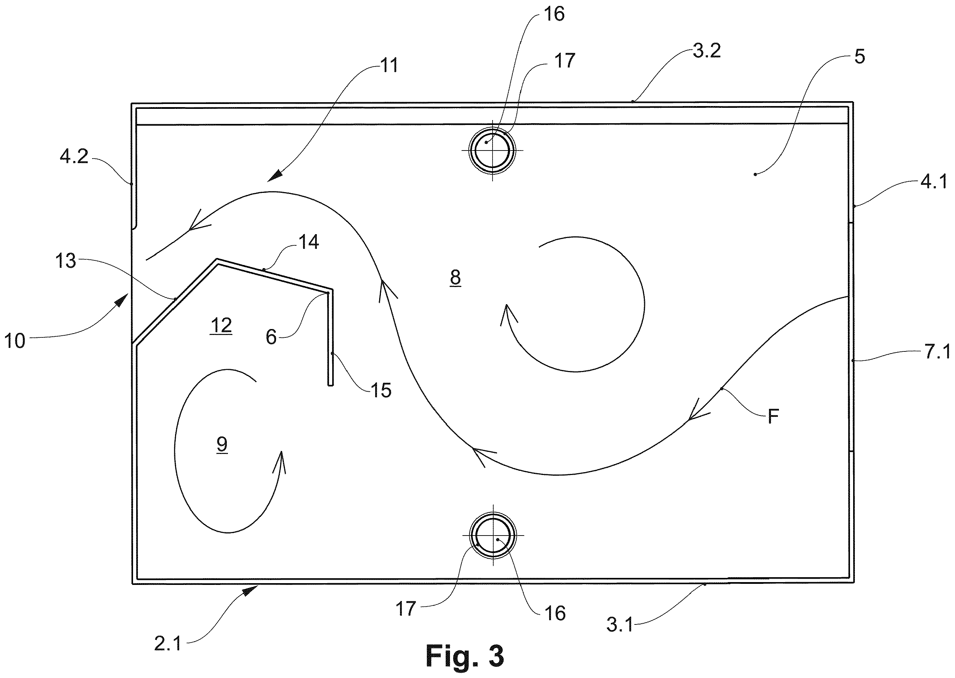

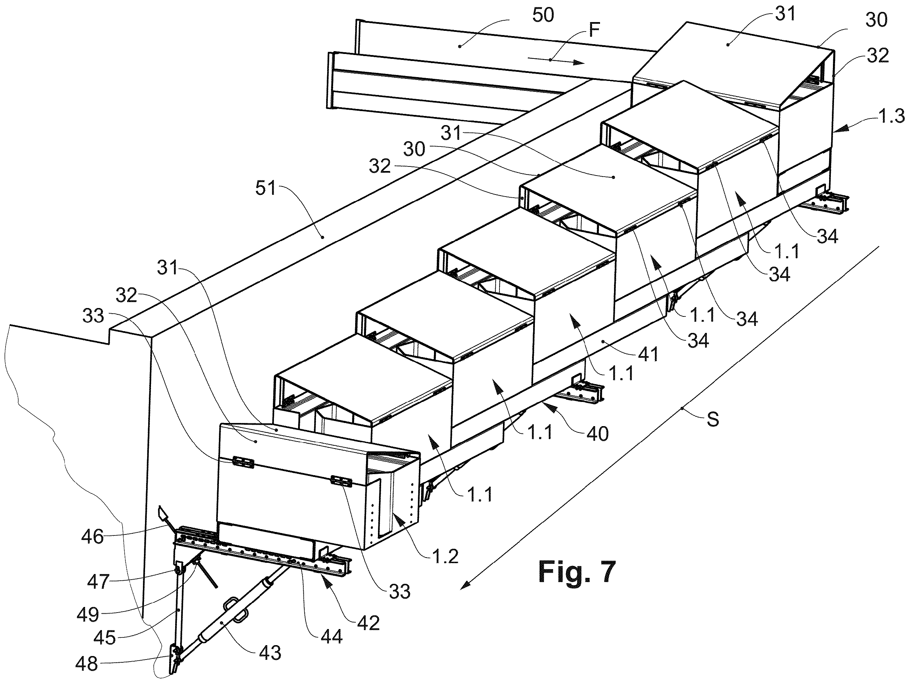

Das in den **Figuren 1 bis 3** in verschiedenen Ansichten gezeigte Einzelbecken 2.1 einer erfindungsgemässen Wasserführungseinheit 1.1 gemäss der ersten Lösung (siehe auch Figur 7) weist eine rechteckförmige Grundform mit jeweils zwei, einander gegenüber liegenden, parallelen Aussenlängswänden 3.1, 3.2 und zwei, einander gegenüber liegenden, senkrecht zu den Aussenlängswänden 3.1, 3.2 angeordneten, kürzeren Aussenquerwänden 4.1, 4.2.

Die genannten Aussenwände 3.1, 3.2, 4.1, 4.2 bilden eine Aussenwandanordnung aus, welche einen Wasseraufnahmeraum 8 begrenzen.

Das Einzelbecken 2.1 bzw. dessen Wasseraufnahmeraum 8 wird gegen unten durch einen Boden 5 begrenzt und ist nach oben, d.h. in einer dem Boden 5 entgegen gesetzten Richtung offen.

In einer stromaufwärts angeordneten ersten Aussenquerwand 4.1 ist eine rechteckförmige Einlassöffnung 7.1 ausgebildet, durch welche Wasser aus einem stromaufwärts benachbarten Einzelbecken 2.1 in den Wasseraufnahmeraum 8 des Einzelbeckens 2.1 strömen kann.

Die Einlassöffnung 7.1 ist nach oben offen. Zum Boden 5 hin wird die Einlassöffnung 7.1 durch einen schwellenartigen Wandabschnitt 21 begrenzt. Das heisst, die Einlassöffnung 7.1 reicht nicht bis zum Boden 5 des Einzelbeckens 2.1.

In einer stromabwärts angeordneten zweiten Aussenquerwand 4.2 ist eine rechteckförmige Auslassöffnung 10 ausgebildet. Die Höhe der Auslassöffnung 10 ist mehr als doppelt so gross wie deren Breite, wodurch der Auslassöffnung 10 ein schlitzartiger Charakter verliehen wird.

Die Auslassöffnung 10 ist ebenfalls nach oben offen. Ferner reicht die Auslassöffnung 10 bis zum Boden 5 des Einzelbeckens 2.1.

Die Einlass- 7.1 und Auslassöffnung 10 sind folglich in einander gegenüber liegenden Aussenwänden 4.1, 4.2 angeordnet.

Das Einzelbecken 2.1 enthält im Weiteren eine Innenwandanordnung 6. Die Innenwandanordnung 6 zeichnet sich dadurch aus, dass diese in dem durch die Aussenwände 3.1, 3.2, 4.1, 4.2 begrenzten Wasseraufnahmeraum 8 angeordnet ist.

Die Innenwandanordnung 6 bildet zusammen mit der zweiten Aussenquerwand 4.2 und einem Wandabschnitt einer zweiten Aussenlängswand 3.2 eine Durchflusspassage 11, auch Wasserführungskanal genannt, aus.

Die Innenwandanordnung 6 umfasst eine an die zweite Aussenquerwand 4.2 anschliessende und von der Auslassöffnung 10 in einem Winkel von 45° in Richtung Wasseraufnahmeraum 8 wegführende erste Wasserführungswand 13. Die erste Wasserführungswand 13 sorgt dafür, dass das Wasser schräg zur zweiten Aussenquerwand 4.2 aus dem Einzelbecken 2.1 herausströmt und somit auch schräg, d.h. in einem Winkel von 45° zur Aussenquerwand 2.1 durch die Einlassöffnung 10 in das benachbarte Einzelbecken 2.1 einströmt. Dadurch wird sicher gestellt, dass das Wasser nicht auf direktem Weg von der Einlassöffnung 10 durch den Wasseraufnahmeraum 8 zur Auslassöffnung 10 strömt.

Im Weiteren umfasst die Innenwandanordnung 6 eine an die erste Wasserführungswand 13 anschliessende und relativ zur zweiten Aussenquerwand 4.2 in einem Winkel von 105° angeordnete zweite Wasserführungswand 14. Die zweite Wasserführungswand 14 sorgt für eine Erweiterung der Durchflusspassage 11 entgegen der Durchflussströmungsrichtung F bzw. für eine Verengung der Durchflusspassage 11 in Durchflussströmungsrichtung F.

Dies bewirkt eine Beschleunigung der Strömung zur Auslassöffnung 10 hin. Überdies unterstützt die Anordnung der zweiten Wasserführungswand 14 im genannten Winkel die Ausbildung einer mäandrierenden Strömung.

Die Innenwandanordnung 6 umfasst im Weiteren eine an die zweite Wasserführungswand 14 anschliessende, parallel zur zweiten Aussenquerwand 4.2 verlaufende und von der Durchflusspassage 11 wegführende Innenquerwand 15.

Die Innenquerwand 15 ermöglicht dank ihrer parallelen Ausrichtung zur zweiten Aussenquerwand 4.2 zusammen mit den beiden Wasserführungswänden 13, 14 und der zweiten Aussenquerwand 4.2 die Ausbildung einer Nische 12 in Form eines taschenartigen Teilraums.

Die Nische 12 ist Teil einer Wasserberuhigungszone 9 im Wasseraufnahmeraum 8. Die Wasserberuhigungszone 9 wird durch die Innenwandanordnung 6 zusammen mit einem Wandabschnitt der zweiten Aussenquerwand 4.2 und einem Wandabschnitt einer ersten Aussenlängswand 3.1 ausgebildet. Die Wasserberuhigungszone 9 ist stromabwärts betrachtet neben der Durchflusspassage 11 angeordnet. Die Wasserberuhigungszone 9 ist von der Durchflussströmung F entkoppelt. Das heisst, in der Wasserberuhigungszone 9 findet keine Durchströmung statt, so dass sich die Fische in dieser Zone ausruhen und erholen können.

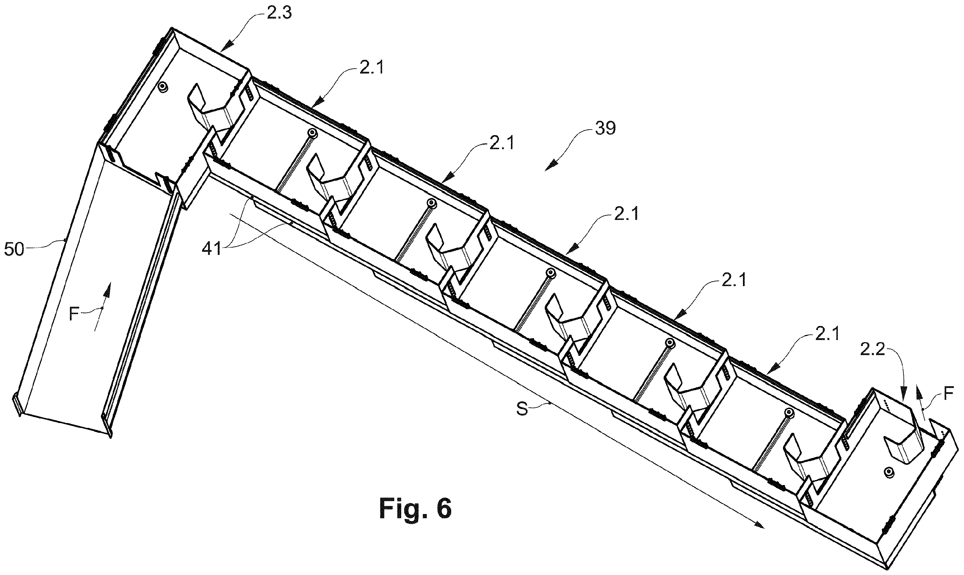

Mit Bezugnahme auf Figur 6 fliesst nun das Wasser aus einem stromaufwärts angeordneten Einzelbecken 2.1 durch die Einlassöffnung 7.1 in den Wasseraufnahmeraum 8 des Einzelbeckens 2.1 ein.

Das einfliessende Wasser wird durch die Durchflusspassage 11 des stromaufwärts angeordneten Einzelbeckens 2.1 wie bereits erwähnt abgelenkt und strömt in einem Winkel von rund 45° zur ersten Aussenquerwand 4.1 schräg zur Beruhigungszone 9 hin gerichtet in den Wasseraufnahmeraum 8 ein.

Das einfliessende Wasser wird wiederum durch die erste Aussenlängswand 3.1 des Einzelbeckens 2.1 abgelenkt und fliesst in einer Omega-(Ω)-förmigen Durchflussströmung durch den Wasseraufnahmeraum 8 zur Durchflusspassage 11 hin.

In der Durchflusspassage 11 wird die Durchflussströmung in einem schlaufenförmigen Strömungsverlauf zur Auslassöffnung 10 hin umgelenkt. Diese bildet an der Auslassöffnung 10 mit der zweiten Aussenquerwand 4.2 einen Winkel von 45° aus.

In diesem Winkel wird das Wasser über die Auslassöffnung 10 aus dem Wasseraufnahmeraum 8 entlassen und durch die Einlassöffnung 7.1 schräg in den Wasseraufnahmeraum 8 des stromabwärts angeordneten Einzelbeckens 2.1 eingeleitet.

Im Wasseraufnahmeraum 8 schliesst an den schwellenartigen Wandabschnitt eine Strömungsrampe 23 an. Die Strömungsrampe 23 überbrückt die Stufe zwischen zwei benachbarten Einzelbecken 2.1 und sorgt für ein kontinuierliches Gefälle zum Boden in Wasseraufnahmeraum 8 hin. Die Strömungsrampe 23 endet im Wasseraufnahmeraum 8.

Das Einzelbecken 2.1 weist an der ersten Aussenlängswand 3.1 Arretiermittel 34 zum Arretieren einer weiter unten noch beschriebenen Abdeckung 30 auf (siehe auch Figur 7).

Im Weiteren weist das Einzelbecken 2.1 an der zweiten Aussenlängswand 3.2 Scharniermittel 33 zur Ausbildung einer Scharnierverbindung mit der genannten Abdeckung 30 auf.

Zur Positionierung und Befestigung des Einzelbeckens 2.1 an einer nachfolgend noch beschriebenen Tragstruktur 40 weist dieses im Boden 5 zwei Befestigungsöffnungen 16 auf.

Um die Befestigungsöffnungen 16 ist jeweils eine in den Wasseraufnahmeraum 8 hinein ragende Positionier- und Befestigungshülse 17 angeordnet. Diese dient der Positionierung und Befestigung des Einzelbeckens 2.1 an der Tragstruktur 40.

Zur Befestigung des Einzelbeckens 2.1 an der Tragstruktur 40 werden Befestigungsnocken (nicht gezeigt) an der Tragstruktur 40 jeweils von unten durch die Positionier- und Befestigungshülse 17 geführt und über eine Schraubverbindung mittels eines auf der Gegenseite angeordneten Sicherungselements 24 in der Positionier- und Befestigungshülse 17 axial fixiert.

Im Boden 5 ist ferner eine Querrippe 18 zur Verstärkung des Bodens 5 im Bereich der Befestigungsöffnungen 16 vorgesehen.

In den Aussenlängswänden 3.1, 3.2 sind Längsrippen 19 zur Verstärkung der Aussenlängswände 3.1, 3.2 im Bereich der Arretiermittel 34 bzw. der Scharnierverbindung 33 vorgesehen.

In den Aussenquerwänden 4.1, 4.2 sind Verbindungsmittel 20 zur Verbindung zweier benachbarter Einzelbecken 2.1 über ihre Aussenquerwände 4.1, 4.2 mittels Schraubverbindungen vorgesehen. Die miteinander verbundenen Aussenquerwände 4.1, 4.2 liegen dabei flächig aneinander.

Die Verbindungsmittel 20 umfassen Durchgangsöffnungen in den Aussenquerwänden 4.1, 4.2 zum Durchführen von Verbindungsschrauben sowie innenseitig an den Aussenquerwänden 4.1, 4.2 angeordneten Schraubleisten mit Schraubgewinden zum Festschrauben der Verbindungsschrauben.

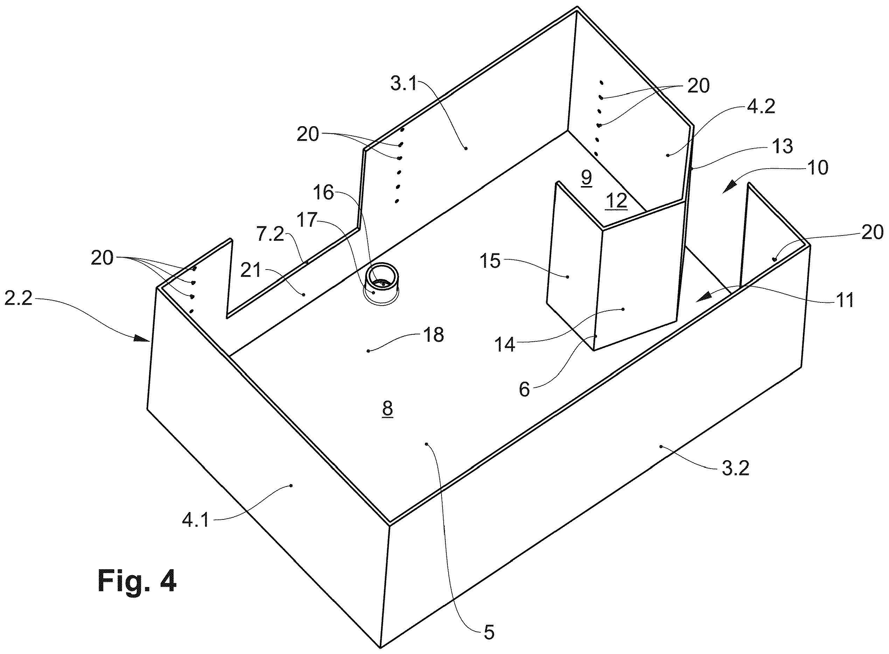

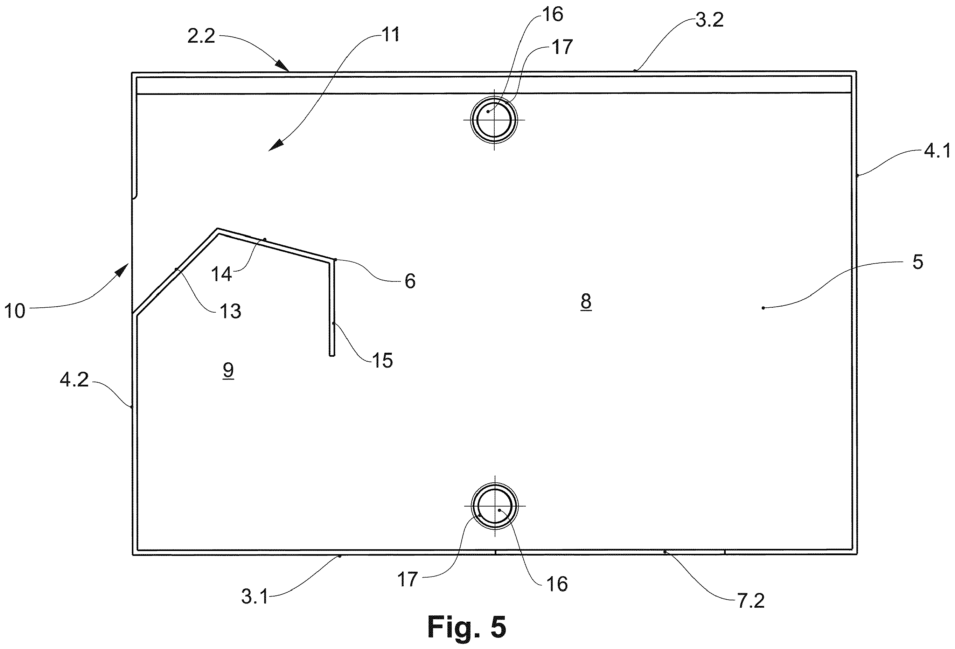

Die **Figuren 4** **und** **5** zeigen eine weitere Ausführungsform eines erfindungsgemässen Einzelbeckens 2.2. Dieses unterscheidet sich vom Einzelbecken 2.1 lediglich durch die Anordnung der Einlassöffnung 7.2 in der ersten Aussenlängswand 3.1 anstatt in der ersten Aussenquerwand 4.1.

Entsprechend ist hier die erste Aussenlängswand 3.1 stromaufwärts angeordnet. Die vorgenannten Verbindungsmittel 20 sind entsprechend in der ersten Aussenlängswand 3.1 und nicht in der ersten Aussenquerwand 4.1 angeordnet.

Die abweichende Anordnung der Einlassöffnung 7.2 hat zur Folge, dass die Einlassöffnung 7.2 und die Auslassöffnung 10 nicht mehr einander gegenüber liegend angeordnet sind. Entsprechend wird die Hauptströmungsrichtung im Einzelbecken 2.2 um 90° umgelenkt.

Das Einzelbecken 2.2 gemäss dieser Ausführungsform wird insbesondere an Stellen eingesetzt, wo die Hauptströmungsrichtung um 90° umgelenkt werden muss. Dies kann zum Beispiel in einem Anströmbereich zu Beginn der Durchflussstrecke der Fall sein, wo das Wasser aus einer Anströmrichtung in die Hauptströmungsrichtung der Durchflussstrecke S umgelenkt werden muss, zu welcher diese parallel verläuft.

Das besagte Einzelbecken kann auch den Abschluss der Durchflussstrecke ausbilden, wo das Wasser aus der Hauptströmungsrichtung der Durchflussstrecke um 90° in eine Wegströmrichtung umgelenkt wird.

Die Anström- und Wegströmrichtung entsprechen dabei insbesondere der Hauptströmungsrichtung des Gewässers, an welchem die Fischaufstiegsanlage angeordnet ist. In der **Figur 6** ist im Anströmbereich ein Einzelbecken 2.3 gemäss einer dritten Ausführungsform angeordnet. Diese unterscheidet sich vom ersten Einzelbecken 2.1 durch eine Auslassöffnung, welche in der zweiten Aussenlängswand und nicht in der zweiten Aussenquerwand angeordnet ist. Auch hier wird die Hauptströmungsrichtung im Einzelbecken 2.3 um 90° umgelenkt.

Die in Figur 6 dargestellte, erfindungsgemässe Fischaufstiegsanlage 39 umfasst eine Mehrzahl von entlang einer Durchflussstrecke S hintereinander angeordnete Einzelbecken 2.1 gemäss der Ausführungsform nach Figur 1 bis 3, bei welchen die Einlass-7.1 und Auslassöffnung 10 jeweils in einer Aussenquerwand 4.1, 4.2 einander gegenüber liegend angeordnet sind.

Die Einzelbecken 2.1 liegen einander über ihre Aussenquerwände 4.1, 4.2 flächig an und sind über Schraubverbindungen, welche durch die Aussenquerwände 4.1, 4.2 führen, miteinander verbunden. Hierbei trifft jeweils die Auslassöffnung 10 in der zweiten Aussenquerwand 4.2 des stromaufwärts angeordneten Einzelbeckens 2.1 auf die Einlassöffnung 7.1 in der ersten Aussenquerwand 4.1 des stromabwärts angeordneten Einzelbeckens 2.1.

Die Einzelbecken 2.1 sind jeweils zueinander abgestuft angeordnet und liegen Auflagenelementen 41 einer Tragstruktur 40 auf. Die Auflageelemente 41 sind einander überlappend angeordnet, was für die entsprechende Abstufung der Einzelbecken 2.1 sorgt.

Das Wasser wird in einem Anströmbereich über einen Einlaufkanal 50 der Fischaufstiegsanlage 39 in einer Anströmrichtung F zugeführt. Die Fischaufstiegsanlage 39 enthält im Anschluss an den Einlaufkanal 50 ein oben beschriebenes Einzelbecken 2.3, in welchem die Strömung um 90° in die Hauptströmungsrichtung der Durchflussstrecke S umgelenkt wird.

In einem Wegströmbereich am Ende der Durchflussstrecke S schliesst ein Einzelbecken 2.2 gemäss der Ausführungsform nach Figur 4 und 5 an. In diesem wird die Strömungsrichtung wiederum um 90° umgelenkt, nämlich aus der Hauptströmungsrichtung der Durchflussstrecke S in eine Wegströmrichtung.

Die **Figur 7** zeigt eine Anwendung der Fischaufstiegsanlage 39 gemäss Figur 6 an einem Absperrbauwerk 51, z. B. einer Staumauer.

Entlang der stromabwärts weisenden Aussenwand des Absperrwerks 51 sind Wasserführungseinheiten 1.1 mit Einzelbecken 2.1 gemäss der Ausführungsform nach Figur 1 bis 3 geführt. Die Durchflussstrecke S und mit ihr die Hauptströmungsrichtung verläuft parallel zur Aussenwand und folglich senkrecht zur Hauptströmungsrichtung des Gewässers und entsprechend auch senkrecht zur Anström- und Wegströmrichtung.

Dies erklärt, weshalb die Strömungsrichtung im Anströmbereich vor der Durchflussstrecke S und im Wegströmbereich nach der Durchflussstrecke um 90° umgelenkt werden muss. Dies geschieht, wie oben bereits beschrieben, jeweils mittels Einzelbecken 2.2, 2.3, in welchen die Hauptströmungsrichtung um 90° umgelenkt wird.

Die Tragstruktur 40 ist für die Befestigung der Wasserführungseinheiten 1.1 an der stromabwärts weisenden Aussenwand des Absperrbauwerk 51 ausgelegt. So umfasst die Tragstruktur 40 eine Mehrzahl von Winkel-Konsolen 42, welche unter anderem über Wandbefestigungselemente 48 am Absperrbauwerk 51 befestigt sind. Die Befestigung kann mittel Schraubverbindung erfolgen.

Die Winkel-Konsolen 42 umfassen jeweils einen Auflagearm 44 mit einer Auflagefläche, auf welcher flächige Auflageelemente 41 aufliegen.

Die auf den Auflagearmen 44 der Winkel-Konsolen 42 aufliegenden Auflageelemente 41 bilden ihrerseits Auflageflächen für die Wasserführungseinheiten 1.1. aus.

Der Auflagearm 44 ist unter anderem über eine am Absperrbauwerk 51 verankerte Spindelschraube 46 am Absperrbauwerk 51 befestigt. Der Auflagearm 44 ist im weiteren über eine Verbindungsstrebe 45 mit dem Wandbefestigungselement 48 beweglich verbunden. Hierzu ist die Verbindungsstrebe 45 sowohl, z. B. über Gelenkverbindungen 47, gelenkig mit dem Auflagearm 44 als auch gelenkig mit dem Wandbefestigungselement 48 verbunden.

Die Lage des Auflagearms 44 und entsprechend der Auflagefläche relativ zum Wandbefestigungselement 48 und entsprechend zur Aussenwand des Absperrwerks 51 lässt sich über eine mit der Spindelschraube 46 zusammenwirkenden Verstellmutter 49, wie Rändelmutter oder Flügelmutter, einstellen. Durch Drehen der Verstellmutter 49 lässt sich der Auflagearm 44 mit seinem wandseitigen Endabschnitt entlang der Spindelschraube 46 verschieben.

Die gelenkige Verbindung zwischen Auflagearm 44 und Wandbefestigungselement 48 erlaubt zudem eine Schwenkbewegung des Auflagearms 44 relativ zum Wandbefestigungselement 48 bzw. zur Aussenwand.

Auf diese Weise lässt sich beispielsweise unabhängig von einer Neigung der Aussenwand des Absperrwerks 51 eine horizontale Lage des Auflagearms 44 bzw. von dessen Auflagefläche einstellen.

Die Winkel-Konsole 42 umfasst im Weiteren eine längenverstellbare Diagonalstrebe 43. Die Diagonalstrebe 43 enthält zwei teleskopartig ineinander schiebbare Strebenelemente. Dadurch lässt sich die Länge der Diagonalstrebe 43 an die veränderte Lage des Auflagearms 44 anpassen.

Die Diagonalstrebe 43 ist ihrerseits gelenkig mit dem Wandbefestigungselement 48 verbunden. Auflagearm 44, Diagonalstrebe 43 sowie Verbindungsstrebe 45 bilden ein für Winkel-Konsolen typisches Stützdreieck aus.

Die Auflageelemente 41 sind horizontal gelagert und überlappen einander in den Übergangsbereichen. Die Überlappung bildet zugleich die Gefällestufe zwischen zwei aufeinander folgenden Wasserführungseinheiten 1.1. aus, wobei die Höhe der Auflageelemente 41 der Stufenhöhe entsprechen.

Die Wasserführungseinheiten 1.1 sind jeweils auf ein Auflageelement 41 aufgesetzt und in Anschlag mit der Stirnseite des stromaufwärts überlappenden Auflageelements 41 gebracht.

Die Wasserführungseinheiten 1.1, 1.2, 1.3 umfassen jeweils eine Abdeckung 30. Die Abdeckung 30 dient einerseits dem Schutz der Fische vor Fressfeinden und andererseits dem Schutz vor Verschmutzung der Einzelbecken 1.1, 1.2, 1.3 durch herabfallende Gegenstände. Zudem bietet die Abdeckung eine willkommene Beschattung des Wasseraufnahmeraums 8.

Die Abdeckung 30 umfasst ein geneigtes Pultdach 31 sowie eine Scharnierwand 32, welche parallel zu den Aussenlängswänden 3.1, 3.2 verläuft. Die Scharnierwand 32 ist über Scharnierverbindungen 33 mit einer Aussenlängswand 3.2 verbunden.

Durch Schwenken der Abdeckung 30 um die Scharnierverbindungen 33 lässt sich diese hochklappen, so dass der Zugang in den Wasseraufnahmeraum 8 des Einzelbeckens 2.1, 2.2., 2.3 für Unterhaltsarbeiten, Reinigungsarbeiten etc. frei wird.

Die Abdeckung 30 ist ferner über das Pultdach 31 an der gegenüber liegenden Aussenlängswand 3.1, welche nicht die Scharnierverbindung 33 ausbildet, über Arretiermittel 34, wie eine Schnapp- oder Rastverbindung, lösbar arretiert. Dadurch kann ein unbeabsichtigtes Hochklappen der Abdeckung 30 durch Fremdeinwirkung vermieden werden.

Die Wasserführungseinheiten 1.1, 1.2, 1.3 sind im Übrigen derart auf der Tragstruktur 40 angeordnet, dass diese zum Absperrbauwerk 51 einen Abstand ausbilden. Zwischen Absperrbauwerk 51 und Wasserführungseinheiten 1.1, 1.2, 1.3 wird auf diese Weise ein Durchgang ausgebildet.

Der Durchgang dient dazu, dass Wasser sowie Geschiebe und Schwemmholz, welches bei hohem Wasserstand über das Absperrbauwerk 51 fliesst, nicht direkt auf die Wasserführungseinheiten 1.1, 1.2, 1.3 stürzt sondern zur Hauptsache an den Wasserführungseinheiten 1.1, 1.2, 1.3 vorbei durch den Durchgang geführt wird.

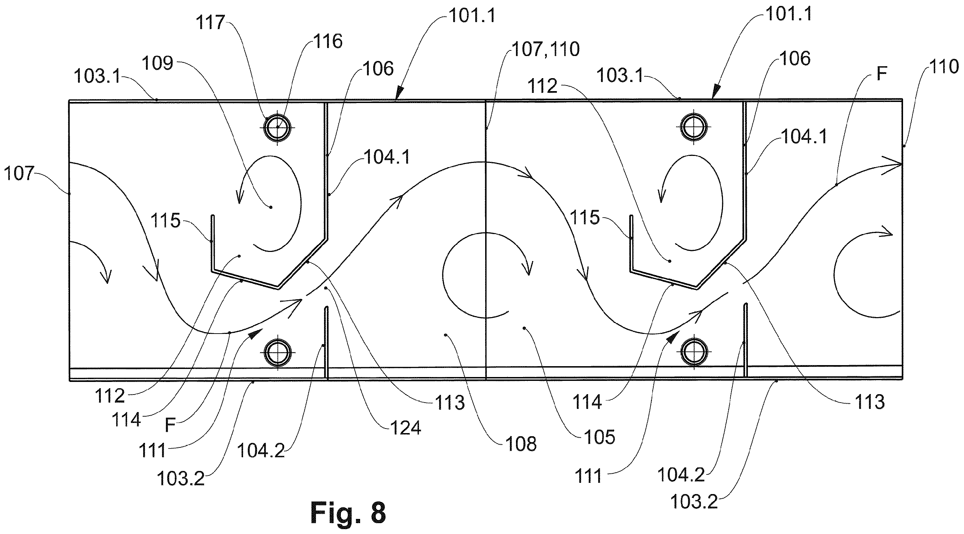

Die in **Figur 8** gezeigte Wasserführungseinheit 101.1 bzw. der Grundkörper einer Wasserführungseinheit 101.1 gemäss der zweiten Lösung weist eine rechteckförmige Grundform mit jeweils zwei, einander gegenüber liegenden, parallelen Aussenlängswänden 103.1, 103.2 auf.

Die Wasserführungseinheit 101.1 wird gegen unten durch einen Boden 105 begrenzt und ist nach oben, d.h. in einer dem Boden 105 entgegen gesetzten Richtung offen.

Die genannten Aussenlängswände 103.1, 103.2 bilden zusammen mit dem Boden 105 einen nach oben offenen kanalförmigen Abschnitt aus. Dieser endet stromaufwärts in einer Einlassöffnung 107 und stromabwärts in einer Auslassöffnung 110. Der Durchflussquerschnitt der nach oben offenen Einlass- bzw. Auslassöffnung 107, 110 ist jeweils rechteckförmig und wird durch die beiden Aussenlängswänden 103.1, 103.2 und den Boden 105 begrenzt.

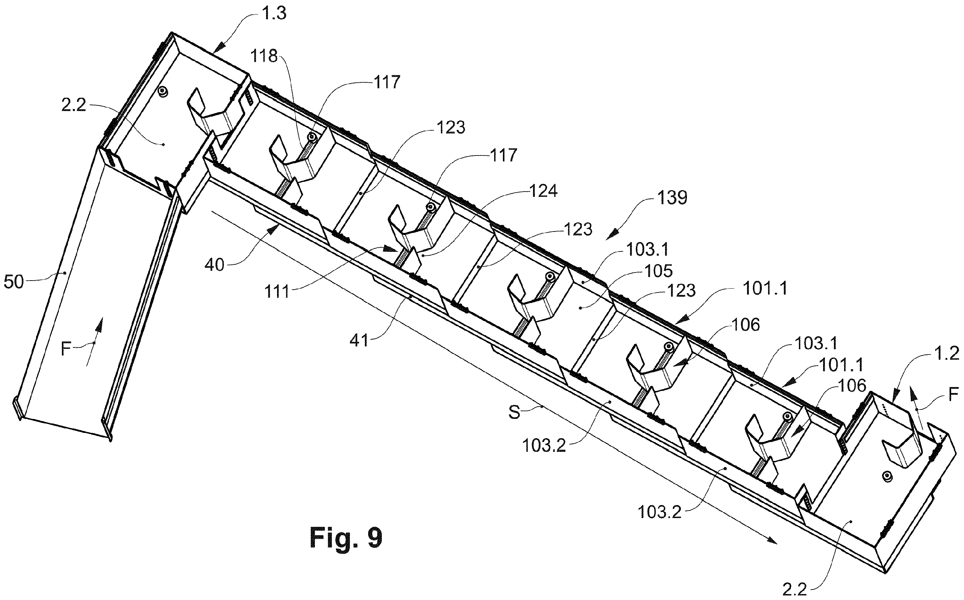

Durch die Einlassöffnung 107 strömt Wasser aus einer stromaufwärts benachbarten, baugleichen Wasserführungseinheit 101.1 ein. Durch die Auslassöffnung 110 strömt Wasser in eine stromaufwärts benachbarte, baugleiche Wasserführungseinheit 101.1 aus (siehe auch Figur 9).

Die Wasserführungseinheit 101.1 enthält im Weiteren eine Innenwandanordnung 106, welche sich entlang der Hauptströmungsrichtung S zwischen der Einlassöffnung 107 und der Auslassöffnung 110 erstreckt. Die Innenwandanordnung 106 bzw. deren Innenquerwandabschnitte 104.1, 104.2 sind etwa um einen Drittel der Gesamtlänge der Wasserführungseinheit 101.1 von der Auslassöffnung 110 in Richtung Einlassöffnung 107 versetzt angeordnet.

Die Innenwandanordnung 6 bildet eine Durchflusspassage 111 aus. Die Innenwandanordnung 106 enthält hierzu zwei quer zu den Aussenlängswänden 103.1, 103.2 verlaufende Innenquerwandabschnitte 104.1, 104.2, welche eine am Ende der Durchflusspassage 111 angeordnete, schlitzförmige Durchlassöffnung 124 ausbilden.

Die Innenwandanordnung 106 umfasst zur Ausbildung der Durchflusspassage 111 eine an einen ersten Innenquerwandabschnitt 104.1 anschliessende und von der Durchlassöffnung 124 in Richtung Einlassöffnung 107 in einem Winkel von 45° relativ zum Durchflussquerschnitt der Durchlassöffnung 124 wegführende erste Wasserführungswand 113.

Die erste Wasserführungswand 113 sorgt dafür, dass das Wasser schräg zu den Innenquerwandabschnitten 104.1, 104.2 aus der Durchlassöffnung 124 herausströmt.

Dadurch wird sicher gestellt, dass das Wasser nicht auf direktem Weg durch die Wasseraufnahmeeinheit 101.1 strömen kann.

Im Weiteren umfasst die Innenwandanordnung 106 eine an die erste Wasserführungswand 113 anschliessende zweite Wasserführungswand 114.

Die Durchflusspassage 111 wird durch die Wasserführungswände 113, 114 und einem Wandabschnitt der zweiten Aussenlängswand 103.2 ausgebildet.

Die zweite Wasserführungswand 114 schliesst mit der zweiten Aussenlängswand 103.2 einen Winkel von rund 15° ein.

Die zweite Wasserführungswand 14 sorgt für eine Erweiterung der Durchflusspassage 111 entgegen der Durchflussströmungsrichtung F bzw. für eine Verengung der Durchflusspassage 11 in Durchflussströmungsrichtung F.

Dies bewirkt eine Beschleunigung der Strömung zur Durchlassöffnung 124 hin. Überdies unterstützt die Anordnung der zweiten Wasserführungswand 114 im genannten Winkel die Ausbildung einer mäandrierenden Strömung.

Die Innenwandanordnung 106 umfasst im Weiteren eine an die zweite Wasserführungswand 114 anschliessende, parallel zu den Innenquerwandabschnitten 104.1, 104.2 verlaufende und von der Durchflusspassage 111 wegführende Abschirmwand 115.

Die Abschirmwand 15 ermöglicht dank ihrer parallelen Ausrichtung zu den Innenquerwandabschnitten 104.1, 104.2 zusammen mit den beiden Wasserführungswänden 113, 114 und dem ersten Innenquerwandabschnitt 104.1 die Ausbildung einer Nische 112 in Form eines taschenartigen Teilraums.

Die Nische 112 ist Teil einer Wasserberuhigungszone 109 im Wasseraufnahmeraum 108. Die Wasserberuhigungszone 109 wird durch die Innenwandanordnung 106 zusammen mit dem ersten Innenquerwandabschnitt 104.1 und einem Wandabschnitt der ersten Aussenlängswand 103.1 ausgebildet. Die Wasserberuhigungszone 109 ist stromabwärts betrachtet neben der Durchflusspassage 111 angeordnet.

Die Wasserberuhigungszone 109 ist von der Durchflussströmung F entkoppelt. Das heisst, in der Wasserberuhigungszone 109 findet keine Durchströmung statt, so dass sich die Fische in dieser Zone ausruhen und erholen können.

Zur Ausbildung der Fischaufstiegsanlage 139 nach **Figur 9** werden die Wasserführungseinheiten 101.1 miteinander verbunden. An den Verbindungsstellen zweier Wasserführungseinheiten trifft jeweils die Auslassöffnung 110 einer stromaufwärts angeordneten Wasserführungseinheit 101.1 mit der Einlassöffnung 107 einer stromabwärts benachbart angeordneten Wasserführungseinheit 101.1 zusammen (siehe auch Figur 8).

Da der Durchflussquerschnitt der Ein- und Auslassöffnung 107, 110 durch den Boden 105 und die Aussenlängswände 103.1, 103.2 begrenzt wird, findet im Übergang zwischen den beiden Wasserführungseinheiten 101.1 keine Veränderung der Querschnittsbreite auf.

Allerdings sind jeweils zwei benachbarte Wasserführungseinheiten 101.1 zueinander höhenversetzt bzw. abgestuft angeordnet, so dass im Übergang zwischen den beiden Wasserführungseinheiten 101.1 in Strömungsrichtung eine Gefällestufe 123 ausgebildet wird.

Die Wasserführungseinheiten 101.1 liegen Auflagenelementen 41 einer Tragstruktur 40 auf und sind über diese miteinander verbunden. Die Auflageelemente 41 sind einander überlappend angeordnet, was für die entsprechende Abstufung der Wasserführungseinheiten 101.1 sorgt. Die Anordnung der Auflageelemente 41 sowie die Ausbildung der Tragstruktur wurde bereits weiter oben im Zusammenhang mit der ersten Lösung beschrieben. Die entsprechende Offenbarung trifft auch auf die zweite Lösung zu.

Zwischen den Innenwandanordnung 106 einer stromaufwärts angeordneten Wasserführungseinheit 101.1 und der Innenwandanordnung 106 einer stromabwärts angeordneten, benachbarten baugleichen Wasserführungseinheit 101.1 wird ein gemeinsamer Wasseraufnahmeraum 108 ausgebildet. Die Ein- und Auslassöffnungen 107, 110 der Wasserführungseinheiten 101.1 sind dabei im inneren des Wasseraufnahmeraums 108 angeordnet.

Das durch die Fischaufstiegsanlage 136 fliessende Wasser wird nun durch die Durchflusspassage 111 der stromaufwärts angeordneten Wasserführungseinheit 101.1 abgelenkt und strömt in einem Winkel von rund 45° zur ersten Innenquerwand 1044.1 schräg zur Beruhigungszone 109 hin gerichtet in den gemeinsamen Wasseraufnahmeraum 108 ein.

Das einfliessende Wasser wird wiederum durch die erste Aussenlängswand 103.1 abgelenkt und fliesst in einer Omega-(Ω)-förmigen Durchflussströmung durch den Wasseraufnahmeraum 108 zur Durchflusspassage 111 der stromabwärts benachbarten Wasserführungseinheit 101.1 hin.

In der Durchflusspassage 111 selbst wird die Durchflussströmung in einem schlaufenförmigen Strömungsverlauf zur Durchlassöffnung 124 hin umgelenkt. Diese bildet an der Durchlassöffnung 124 mit der ersten Innenquerwand 104.1 einen Winkel von 45° aus.

In diesem Winkel wird das Wasser in den gemeinsamen Wasseraufnahmeraum 108 entlassen.

Im gemeinsamen Wasseraufnahmeraum 108 ist im Bereich der Verbindungsstelle zwischen den beiden Wasserführungseinheit 101.1 wie bereits erwähnt eine Stufe 123 angeordnet. Die Stufe 123 sorgt für eine erneute Beschleunigung der Strömung innerhalb des Aufnahmeraums 108.

Während gemäss der ersten Lösung die Stufe zwischen zwei Wasserführungseinheiten 101.1 mit dem Ausfluss des Wasser aus der Durchflusspassage zusammenfällt und somit für eine kumulierte Beschleunigung der Strömung sorgt, sind die Durchflusspassage 111 und die Stufe 124 gemäss der zweiten Lösung in Strömungsrichtung räumlich voneinander getrennt.

Dadurch wird sowohl in der Durchflusspassage 111 als auch im gemeinsamen Aufnahmeraum 108 im Bereich der Stufe 124 jeweils eine Beschleunigung der Strömung erreicht. Die in Strömungsrichtung F nacheinander und räumlich getrennt auftretende Beschleunigung der Strömung wirkt sich positiv auf das Schwimmverhalten der Fische aus, da eine Beschleunigung der Strömung als Lockströmung für die Fische dient, welche diese zum Aufsteigen anregen sollen.

Zudem wirkt sich die Anordnung gemäss der zweiten Lösung auch positiv auf den Wasserstand in den Wasserführungseinheit 101.1 auf. Das heisst, im Vergleich zur ersten Lösung, weisen die Wasserführungseinheiten 101.1 gemäss der zweiten Lösung bei gleicher Durchströmung einen höheren Wasserstand auf.

Die Grundkörper der Wasserführungseinheiten 101.1 können an der ersten Aussenlängswand 103.1 Arretiermittel zum Arretieren einer bereits zur ersten Lösung beschriebenen Abdeckung 30 aufweisen. Im Weiteren können die Grundkörper der Wasserführungseinheiten 101.1 an der zweiten Aussenlängswand 103.2 Scharniermittel zur Ausbildung einer Scharnierverbindung mit der genannten Abdeckung aufweisen.

Zur Positionierung und Befestigung der Wasserführungseinheit 101.1 an die bereits weiter oben beschriebene Tragstruktur 40 weist dieses im Boden 105 zwei Befestigungsöffnungen 116 auf.

Um die Befestigungsöffnungen 116 ist jeweils eine in den Wasseraufnahmeraum 108 hinein ragende Positionier- und Befestigungshülse 117 angeordnet. Diese dient der Positionierung und Befestigung Wasserführungseinheit 101.1 an der Tragstruktur 40.

Zur Befestigung der Wasserführungseinheit 101.1 an der Tragstruktur 40 werden Befestigungsnocken (nicht gezeigt) an der Tragstruktur 40 jeweils von unten durch die Positionier- und Befestigungshülse 117 geführt und über eine Schraubverbindung mittels eines auf der Gegenseite angeordneten Sicherungselements in der Positionier- und Befestigungshülse 117 axial fixiert. Die Befestigung der Wasserführungseinheiten 101.1 an die Tragstruktur 40 erfolgt also analog zur ersten Lösung.

Im Boden 105 ist ferner eine Querrippe 118 zur Verstärkung des Bodens 105 im Bereich der Befestigungsöffnungen 116 vorgesehen.

Im Betrieb der Anlage wird das Wasser in einem Anströmbereich über einen Einlaufkanal 50 der Fischaufstiegsanlage 139 in einer Anströmrichtung F zugeführt. Die Fischaufstiegsanlage 139 enthält im Anschluss an den Einlaufkanal 50 eine bereits weiter oben beschriebene Wasserführungseinheit 2.3 mit einem Einzelbecken 2.3, in welchem die Strömung um 90° in die Hauptströmungsrichtung der Durchflussstrecke S umgelenkt wird.

In einem Wegströmbereich am Ende der Durchflussstrecke S schliesst eine ebenfalls bereits weiter oben beschriebene Wasserführungseinheit 1.2 mit einem Einzelbecken 2.2 an. In diesem wird die Strömungsrichtung wiederum um 90° umgelenkt, nämlich aus der Hauptströmungsrichtung der Durchflussstrecke S in eine Wegströmrichtung.

Zwischen den beiden genannten Einzelbecken 2.3, 2.2 durchfliesst das Wasser die oben beschriebenen, in Hauptströmungsrichtung S nacheinander angeordneten Wasserführungseinheiten 101.1 gemäss der zweiten Lösung.

## Patentansprüche

1. Wasserführungseinheit (1.1, 1.2, 1.3) für eine Fischaufstiegsanlage (39), umfassend ein Einzelbecken (2.1, 2.2, 2.3), welches jeweils einen durch Aussenwände (4.1, 4.2, 3.1, 3.2) und einen Boden (5) begrenzten Wasseraufnahmeraum (8) sowie eine in einer ersten Aussenwand (4.1, 3.1) angeordnete Einlassöffnung (7.1, 7.2) und eine in einer zweiten Aussenwand (4.2) angeordnete Auslassöffnung (10) für den Durchfluss von Wasser zwischen benachbarten Einzelbecken (2.1, 2.2, 2.3) ausbildet, und das Einzelbecken (2.1, 2.2, 2.3) eine Innenwandanordnung (6) enthält, welche zur Auslassöffnung (10) hin zusammen mit Wandabschnitten von Aussenwänden (3.2, 4.2) eine Durchflusspassage (11) ausbildet, wobei die Innenwandanordnung (6) eine an die zweite Aussenwand (4.2) anschliessende und von der Auslassöffnung (10) in einem Winkel von 30° bis 60° in Richtung Wasseraufnahmeraum (8) wegführende erste Wasserführungswand (13) enthält,
**dadurch gekennzeichnet, dass**
die Innenwandanordnung (6) im Weiteren:
- eine an die erste Wasserführungswand (13) anschliessende und unter Erweiterung der Durchflusspassage (11) entgegen der Durchflussströmungsrichtung (F) relativ zur zweiten Aussenwand (4.2) in einem Winkel von 100° bis 110° angeordnete zweite Wasserführungswand (14); sowie
- eine an die zweite Wasserführungswand (14) anschliessende und in einem Winkel von 0° bis 15° zur zweiten Aussenwand (4.2) angeordnete und von der Durchflusspassage (11) wegführende Innenquerwand (15)
enthält.

2. Wasserführungseinheit (1.1, 1.2, 1.3) nach Anspruch 1, **dadurch gekennzeichnet, dass** zwei Aussenwände (3.2, 4.2) im Bereich der Durchflusspassage (11) einen rechten Winkel ausbilden, so dass die Durchflusspassage (11) in Durchflussströmungsrichtung (F) eine sprunghafte Verengung ausbildet.

3. Wasserführungseinheit (1.1, 1.2, 1.3) nach einem der Ansprüche 1 bis 2, **dadurch gekennzeichnet, dass** die Durchflusspassage (11) derart ausbildet ist, dass die Durchflussströmungsrichtung (F) des durch die Auslassöffnung (10) aus dem Einzelbecken (2.1, 2.2, 2.3) ausströmenden Wassers gegenüber der zweiten Aussenwand (4.2) einen Winkel von 30° bis 60° einschliesst.

4. Wasserführungseinheit (1.1, 1.2, 1.3) nach einem der Ansprüche 1 bis 3, **dadurch gekennzeichnet, dass** die Innenwandanordnung (6) zusammen mit Wandabschnitten von Aussenwänden (3.1, 4.2) stromabwärts betrachtet eine neben der Durchflusspassage (11) entkoppelt angeordnete Wasserberuhigungszone (9) ausbildet.

5. Wasserführungseinheit (1.1, 1.2, 1.3) nach einem der Ansprüche 1 bis 4, **dadurch gekennzeichnet, dass** die Innenwandanordnung (6) zur Wasserberuhigungszone (9) hin eine Nische (12) ausbildet.

6. Wasserführungseinheit (1.1, 1.2, 1.3) nach einem der Ansprüche 1 bis 5, **dadurch gekennzeichnet, dass** die Breite der Einlassöffnung (7.1, 7.2) gleich gross oder grösser ist als die Breite der Auslassöffnung (10).

7. Wasserführungseinheit (1.1, 1.2, 1.3) nach einem der Ansprüche 1 bis 6, **gekennzeichnet, durch** eine Abdeckung (30).

8. Wasserführungseinheit (1.1, 1.2, 1.3) nach Anspruch 7, **dadurch gekennzeichnet, dass** die Abdeckung (30) schwenkbar und/oder abnehmbar ausgebildet ist.

9. Fischaufstiegsanlage (39) mit einer Mehrzahl von miteinander verbundenen, eine Durchflussstrecke (S) ausbildenden Wasserführungseinheiten (1.1, 1.2, 1.3), insbesondere gemäss den Ansprüchen 1 bis 8, welche jeweils eine Einlassöffnung (7.1, 7.2) und eine Auslassöffnung (10) für den Durchfluss von Wasser zwischen benachbarten Einzelbecken (2.1, 2.2, 2.3) sowie einen Wasseraufnahmeraum (8) ausbildenden, sowie enthaltend eine Tragstruktur (40) zur Befestigung von Wasserführungseinheiten (1.1, 1.2, 1.3) an der Aussenwand einer Installation (51), insbesondere an einem Absperrbauwerk,
**dadurch gekennzeichnet, dass**
die Tragstruktur (40) mindestens eine winkelverstellbare Konsole (42) mit einem Auflagearm (44) und mit mindestens einem Wandbefestigungselement (48) zur Befestigung an der Aussenwand der Installation (51) umfasst.

10. Fischaufstiegsanlage (39) nach Anspruch 9, **dadurch gekennzeichnet, dass** die mindestens eine Konsole (42) eine längenverstellbare Diagonalstrebe (43) enthält.

11. Fischaufstiegsanlage (39) nach Anspruch 9 oder 11, **dadurch gekennzeichnet, dass** der Auflagearm (44) über eine Gelenkverbindung (47) mit dem mindestens einem Wandbefestigungselement (48) verbunden ist.

12. Fischaufstiegsanlage (39) nach einem der Ansprüche 9 bis 11, **dadurch gekennzeichnet, dass** die Tragstruktur (40) Auflageelemente (41) auf den Auflagearmen (44) umfasst, und die Wasserführungseinheiten (1.1, 1.2, 1.3) auf den Auflageelementen (41) angeordnet sind.

13. Wasserführungseinheit (100.1) für eine Fischaufstiegsanlage (139) mit einer ersten und zweiten in Hauptströmungsrichtung (S) seitlich angeordneten Aussenlängswand (103.1, 103.2) und einem zwischen den Aussenlängswänden (103.1, 103.2) angeordneten Boden (105), ferner enthaltend eine Einlassöffnung (107) und eine der Einlassöffnung (107) gegenüber liegende Auslassöffnung (110) für den Durchfluss von Wasser zwischen benachbarten Wasserführungseinheiten (100.1),
**dadurch gekennzeichnet, dass**
die Wasserführungseinheit (100.1) eine entlang der Hauptströmungsrichtung (S) zwischen der Einlassöffnung (107) und der Auslassöffnung (110) erstreckende Innenwandanordnung (106) enthält, welche eine Durchflusspassage (111) ausbildet, wobei die Innenwandanordnung (106) quer zu den Aussenlängswänden (103.1, 103.2) verlaufenden, eine Durchlassöffnung (124) begrenzende Innenquerwandabschnitte (104.1, 104.2) sowie eine an einen Innenquerwandabschnitt (104.1) anschliessende und von der Durchlassöffnung (124) in Richtung Einlassöffnung (107) in einem Winkel von 30° bis 60° bezogen auf den Durchflussquerschnitt der Durchlassöffnung (124) wegführende Wasserführungswand (113) enthält.

14. Wasserführungseinheit nach Anspruch 13, **dadurch gekennzeichnet, dass** die Einlassöffnung (107) und die Auslassöffnung (110) jeweils eine Breite aufweisen, welche der Distanz zwischen den Aussenlängswänden (103.1, 103.2) entspricht, sowie eine Höhe aufweisen, welche der Höhe der Aussenlängswände (103.1, 103.2) entspricht.

15. Wasserführungseinheit nach Anspruch 13 oder 14, **dadurch gekennzeichnet, dass** die Innenwandanordnung (106) bzw. deren Innenquerwandabschnitte (104.1, 104.2) um ein Fünftel bis zur Hälfte der Gesamtlänge der Wasserführungseinheit (101.1) gegenüber der Auslassöffnung (110) in Richtung Einlassöffnung (107) zurückversetzt in der Wasserführungseinheit (101.1) angeordnet ist.

16. Fischaufstiegsanlage (39) mit einer Mehrzahl von miteinander verbundenen, eine Durchflussstrecke (S) ausbildenden Wasserführungseinheiten (101.1, 101.2, 101.3), insbesondere gemäss den Ansprüchen 13 bis 15,
**dadurch gekennzeichnet, dass**
jeweils die Auslassöffnung (110) einer stromaufwärts angeordneten Wasserführungseinheit (101.1) mit der Einlassöffnung (107) einer stromabwärts benachbart angeordneten Wasserführungseinheit (101.1) zusammentrifft, wobei im Übergang zwischen zwei Wasserführungseinheiten (101.1) eine Stufe (123) oder Rampe ausgebildet wird, und wobei jeweils zwischen der Innenwandanordnung (106) einer stromaufwärts angeordneten Wasserführungseinheit (101.1) und der Innenwandanordnung (106) einer benachbarten, stromabwärts angeordneten Wasserführungseinheit (101.1) ein gemeinsamer Wasseraufnahmeraum (108) ausgebildet wird.

17. Fischaufstiegsanlage gemäss Anspruch 16, **dadurch gekennzeichnet, dass** der gemeinsame Wasseraufnahmeraum (108) ein Kanalabschnitt, insbesondere von konstanter Breite, ausbildet.

18. Absperrbauwerk (51) mit einer Fischaufstiegsanlage, insbesondere gemäss den Ansprüchen 9 bis 12 oder 16 bis 17, mit einer Mehrzahl von miteinander verbundenen, eine Durchflussstrecke (S) ausbildenden Wasserführungseinheiten (1.1, 1.2, 1.3), insbesondere gemäss den Ansprüchen 1 bis 8 oder 13 bis 15, welche jeweils eine Einlassöffnung (7.1, 7.2) und eine Auslassöffnung (10) für den Durchfluss von Wasser zwischen benachbarten Wasserführungseinheiten (1.1, 1.2, 1.3) sowie insbesondere einen Wasseraufnahmeraum (8) ausbilden,
**dadurch gekennzeichnet, dass**
Wasserführungseinheiten (1.1, 1.2, 1.3) über eine Tragstruktur (40) an einer stromabwärts weisenden Aussenwand eines Absperrbauwerks (51) befestigt sind, so dass die Durchflussstrecke (S) mindestens abschnittsweise parallel zur Aussenwand des Absperrbauwerks (51) verläuft.

19. Absperrbauwerk (51) nach Anspruch 18, **dadurch gekennzeichnet, dass** Wasserführungseinheiten (1.1, 1.2, 1.3) unter Ausbildung einer parallel zur Aussenwand des Absperrbauwerks (51) verlaufenden Reihe von Wasserführungseinheiten (1.1, 1.2, 1.3) entlang der Durchflussstrecke (S) hintereinander angeordnet sind.
